(19) Europäisches Patentamt
European Patent Office
Office européen des brevets

(11) **EP 3 962 738 B1**

(12) **EUROPÄISCHE PATENTSCHRIFT**

(45) Veröffentlichungstag und Bekanntmachung des Hinweises auf die Patenterteilung:
**12.06.2024   Patentblatt 2024/24**

(21) Anmeldenummer: **20723392.5**

(22) Anmeldetag: **30.04.2020**

(51) Internationale Patentklassifikation (IPC):
**B32B 27/08** (2006.01)    **B29C 48/00** (2019.01)
**B29C 48/21** (2019.01)    **B29C 55/12** (2006.01)
**B32B 1/08** (2006.01)    **B32B 7/12** (2006.01)
**B32B 27/30** (2006.01)    **B65D 65/40** (2006.01)

(52) Gemeinsame Patentklassifikation (CPC):
**B32B 7/12; B29C 48/0018; B29C 48/08;
B29C 48/21; B29C 55/12; B32B 1/08; B32B 7/02;
B32B 27/08; B32B 27/306; B32B 27/308;
B32B 27/32; B32B 27/327; B32B 27/34;
B32B 27/36; B65D 65/40;**    (Forts.)

(86) Internationale Anmeldenummer:
**PCT/EP2020/062164**

(87) Internationale Veröffentlichungsnummer:
**WO 2020/225138 (12.11.2020 Gazette 2020/46)**

(54) **VERFAHREN ZUR HERSTELLUNG EINER MEHRSCHICHTIGEN VERBUNDFOLIE, MEHRSCHICHTIGE VERBUNDFOLIE UND DEREN VERWENDUNG**

METHOD FOR PRODUCING A MULTI-LAYER COMPOSITE FILM, MULTI-LAYER COMPOSITE FILM, AND USE THEREOF

PROCÉDÉ DE FABRICATION D'UNE FEUILLE COMPOSITE MULTICOUCHE, FEUILLE COMPOSITE MULTICOUCHE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2019   DE 102019111524**

(43) Veröffentlichungstag der Anmeldung:
**09.03.2022   Patentblatt 2022/10**

(73) Patentinhaber: **Kuhne Anlagenbau GmbH
53757 St. Augustin/Menden (DE)**

(72) Erfinder: **SCHIFFMANN, Jürgen Michael
53773 Hennef (DE)**

(74) Vertreter: **Kuhnen & Wacker
Patent- und Rechtsanwaltsbüro PartG mbB
Prinz-Ludwig-Straße 40A
85354 Freising (DE)**

(56) Entgegenhaltungen:
**AU-B2- 2001 252 149    US-A1- 2010 003 433
US-A1- 2010 151 219    US-A1- 2017 321 024**

(52) Gemeinsame Patentklassifikation (CPC): (Forts.)
B29C 55/005; B32B 2250/03; B32B 2250/04;
B32B 2250/05; B32B 2250/24; B32B 2270/00;
B32B 2307/31; B32B 2307/518; B32B 2307/54;
B32B 2307/72; B32B 2307/7244; B32B 2307/7246;
B32B 2307/7248; B32B 2307/732; B32B 2307/734;
B32B 2307/738; B32B 2307/75; B32B 2439/70

**Beschreibung**

Technisches Gebiet

Die vorliegende Anmeldung betrifft coextrudierte und biaxial verstreckte Mehrschichtfolien, welche beispielsweise als Verpackungsmaterialien, insbesondere für Lebensmittel, verwendet werden können, ein Verfahren zu deren Herstellung und deren Verwendung, vorzugsweise zum Verpacken eines Nahrungsmittels, eines Genussmittels oder eines flüssigen oder festen, insbesondere pulverförmigen, Guts. Die vorliegende Anmeldung betrifft jedoch nicht laminierte Mehrschichtfolien und auch nicht entsprechende Herstellungsverfahren.

Stand der Technik und Problemstellung

Aus dem Stand der Technik sind einerseits laminierte Mehrschichtfolien bekannt, welche hervorragende Verpackungsmaterialmaterialen darstellen. So sind Laminate aus mindestens zwei oder drei oder aber aus mehr unabhängig voneinander hergestellten Schichten im Verpackungsmarkt weit verbreitet. Im Wesentlichen unterscheidet man die sogenannten "Duplex"-Laminatfolien und die sogenannten "Triplex"-Laminatfolien. Bei den "Duplex"-Laminatfolien handelt es sich um im Cast- oder Blasverfahren extrudierte Folien, u. a. auch Barrierefolien mit 5, 7 oder 9 Schichten, welche in einem separaten Prozess mit einer wiederum separat hergestellten biaxial verstreckten Folie aus entweder Polyethylenterephthalat (PET), Polyamid (PA) oder Polypropylen (PP) zusammen laminiert (verklebt) werden. Nur mit diesen in aufeinanderfolgenden, separaten Prozessschritten hergestellten und laminierten Folien lässt sich bislang die Summe der gewünschten und/oder benötigten Eigenschaften erzielen. So werden zwei der benötigten Eigenschaften (Siegelbarkeit und Sauerstoff- bzw. Aromabarriere) durch den Anteil der extrudierten Mono- oder Mehrschichtfolie erzielt, und weitere Eigenschaften wie Bedruckbarkeit, Wärme- bzw. Hitzebeständigkeit und mechanische Festigkeit werden durch den Anteil der separat biaxial verstreckten Folie erzielt. Darüber hinaus ist es auch üblich, speziell die Sauerstoffbarriere mittels einer in einem weiteren Prozessschritt aufgetragenen Metallisierung zu erzielen bzw. zu erhöhen.

**Im Markt häufig verbreitete**

**Beispiele von Duplex-Folien:**

| Folientype | Sauerstoff-Barriere |
|---|---|
| BOPP / PE | keine / geringe |
| BOPA / PE | keine / geringe |
| BOPET / PE | keine / geringe |
| BOPP / Metallisierung / PE | durch Metallisierung |
| BOPA / Metallisierung / PE | durch Metallisierung |
| BOPET / Metallisierung / PE | durch Metallisierung |
| BOPET / PE-HV-EVOH-HV-PE | durch Barriereschicht wie EVOH |
| BOPET / PE-HV-PA-EVOH-PA-HV-PE | durch Barriereschicht wie EVOH |

| Duplexfolie | Wärmebeständigkeit/ Schmelzetemperatur der Außenschicht | Bedruckbarkeit | Schrumpf bei 90 °C |
|---|---|---|---|
| BOPP/met/PE | 164 °C | 32 dyn/cm | 1-2% |
| BOPET/met/PE | 250 °C | 43 dyn/cm | 0-1% |
| BOPET/5-Schicht Barrierefolie (PE/HV/EVOH/HV/PE) | 250 °C | 43 dyn/cm | 0-1% |
| BOPET/7-Schicht Barrierefolie (PE/HV/PA/EVOH/PA/HV/PE) | 250 °C | 43 dyn/cm | 1-2% |

Ähnlich verhält es sich mit der "Triplex"-Laminatfolie, wobei hier die Summe der gewünschten und/oder benötigten Eigenschaften mit drei getrennt hergestellten und später mit einander laminierten (verklebten) Folien erzeugt wird.

So wird hier eine biaxial verstreckte Folie aus PET, PA oder PP mit einer separaten Aluminiumfolie laminiert, und dieser Verbund wiederum mit einer extrudierten Cast- oder Blasfolie laminiert.

Hierbei übernimmt die extrudierte Cast- oder Blasfolie die Aufgabe der Siegelbarkeit, die Aluminiumfolie die Aufgabe der Barriere und die biaxial verstreckte Folie die Aufgabe der optimalen Bedruckbarkeit, Wärmebeständigkeit und mechanischen Festigkeit. Nachteilig bei Laminierfolien ist jedoch, dass deren Herstellung naturgemäß aufwendig, ressourcenfressend und teuer und der gesamte Folienverbund oft sehr dick ist, da zunächst eine Mehrzahl von Folien separat hergestellt werden muss und diese anschließend in mehreren hintereinandergeschalteten Verfahrensschritten mittels Heiß- oder Flüssigkleber verklebt werden müssen, um letztlich eine laminierte Mehrschichtfolie zu erhalten.

**Im Markt häufig verbreitete**

**Beispiele für Triplex-Folie:**

| Folientype | Sauerstoff-Barriere |
|---|---|
| BOPP / Alu / PE | durch Aluminiumfolie |
| BOPA / Alu / PE | durch Aluminiumfolie |
| BOPET / Alu / PE | durch Aluminiumfolie |

| Triplexfolie | Wärmebeständigkeit/Schmelzetemperatur der Außenschicht | Bedruckbarkeit | Schrumpf bei 90 °C |
|---|---|---|---|
| BOPP/Alu/PE | 164 °C | 32 dyn/cm | 0% |
| BOPA/Alu/PE | 220 °C | 43 dyn/cm | 0% |
| BOPET/Alu/PE | 250 °C | 43 dyn/cm | 0% |

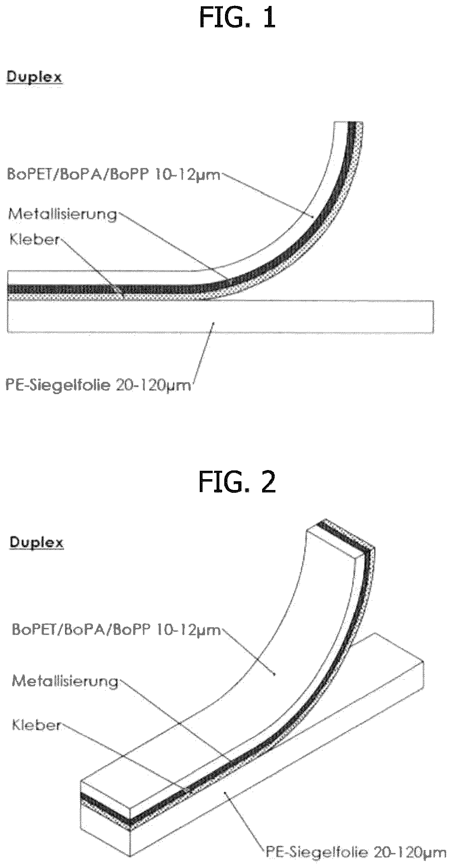

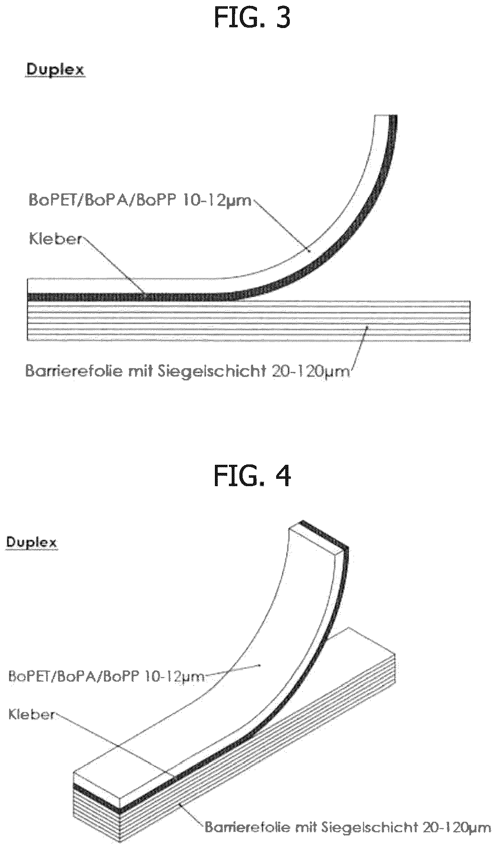

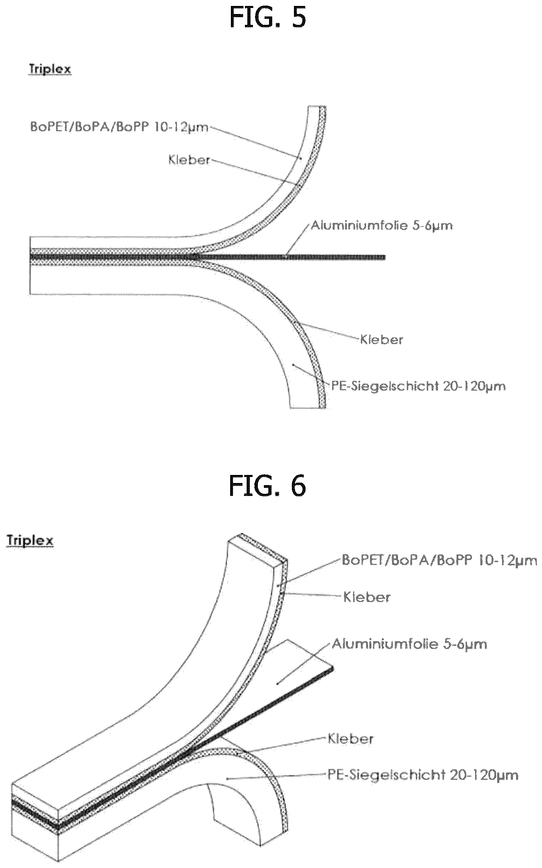

Bekannte Duplex- und Triplexfolien sind in den Fig. 1 bis 6 dargestellt.

Andererseits sind aus dem Stand der Technik Mehrschichtfolien bekannt, welche mittels Coextrusion und biaxialer Verstreckung hergestellt werden. Die hierzu eingesetzten Herstellungsverfahren erlauben die Herstellung einer Mehrschichtfolie in nur einem Verfahrensschritt mittels Coextrusion, wobei ein späteres Verkleben/Laminieren von einzelnen Folienschichten mit den damit verbundenen Nachteilen vollständig wegfällt. Es wird allenfalls eine biaxiale Verstreckung der coextrudierten Roh-Mehrschichtfolie vorgenommen, um die gewünschte Summe an Eigenschaften (Siegelbarkeit, Wärmebeständigkeit, Barriere, mechanische Festigkeit, Bedruckbarkeit) einzustellen. Hierbei werden, abgesehen von der Siegelbarkeit, der überwiegende Teil der geforderten Eigenschaften wie mechanische Festigkeit, Wärmebeständigkeit, Bedruckbarkeit und Barriere (hierbei im Wesentlichen die Sauerstoff- bzw. Gasbarriere) durch die Verwendung von Rohstoffen wie PET, PA, Ethylen-Vinylalkohol-Copolymer (EVOH), Polyvinylalkohol (PVOH) oder Polymilchsäure (PLA) erzielt.

So werden bevorzugt Materialien wie EVOH, PVOH, PVDC und PA für das Erlangen der Sauerstoff- bzw. Gasbarriere verwendet, aber auch Materialien wie PET oder PLA bieten gegenüber Polyolefin basierenden Rohstoffen wie z.B. PE oder PP einen deutlich besseren Barriereschutz, insbesondere nach einer Verstreckung, im Idealfall sogar nach einer biaxialen Verstreckung.

Darüber hinaus finden besonders PET und PA ihren Einsatz in der Außenschicht von Folien, um eine besonders gute Wärmebeständigkeit sowie eine hervorragende Bedruckbarkeit zu erhalten, insbesondere nach einer biaxialen Verstreckung.

Speziell PA und PET tragen neben ihrer herausragenden Wärmebeständigkeit, Bedruckbarkeit und den guten Barriereeigenschaften gegen Gas und Sauerstoff auch im entscheidenden Maße zum Erhalt der gewünschten mechanischen Festigkeit bei, auch hier insbesondere nach einer biaxialen Verstreckung.

So sind aus dem Stand der Technik zahlreiche Verbunde, welche sich hierauf beziehen, bekannt, wie beispielsweise: DE 10 227 580 A1, DE 10 254 172 A1, DE 10 2006 046 483 A1, DE 10 2006 036 844 A1, EP 0 476 836 B2, EP 1 190 847 B1, EP 1 084 035 B1, und EP 1 985 444 A1.

Allerdings haben die aus dem Stand der Technik bekannten Ausführungsformen und Verfahren eines gemeinsam, nämlich alle diese coextrudierten mehrschichtigen Barrierefolien weisen in der Regel einen verhältnismäßig großen Schrumpf von zumeist mehr als 20 %, jedenfalls immer mehr als 5%, jeweils in der Maschinenrichtung (MD) und in der Querrichtung (TD) auf, was für viele Anwendungen, wie beispielsweise Schrumpfbeutel/Deckelfolien, vorteilhaft oder sogar gewünscht ist.

**Im Markt häufig verbreitete Beispiele für Coextrudierte Folien:**

|   | Folientype | Anwendung |
|---|---|---|
| 1 | EVA/PVDC/EVA | a |
| 2 | PE/EVOH/PE | a |
| 3 | PP/EVOH/PP | b |
| 4 | PA/EVOH/PA/PE | a, b |
| 5 | PE/PA/EVOH/PA/PE | a,b |
| 6 | PA/PE/PA/EVOH/PA/PE | a, b |
| 7 | PET/PE/PA/EVOH/PA/PE | a, b |
| 8 | PET/PP/PA/EVOH/PA/PE | a, b |

|   | Anwendung | Folientype | Schrumpf MD + TD |
|---|---|---|---|
| a | Schrumpfbeutel für Fleisch oder Käse | 1, 2, 4, 5, 6, 7, 8 | 25-50% |
| b | Deckelfolien für Fleisch- oder Käseschalen | 3, 4, 5, 6, 7, 8 | 5-20% |

| Coextrudierte biaxial verstreckte Folie (ohne Strahlenvernetzung und Beschichtung) | Wärmebeständigkeit/ Schmelzetemperatur der Außenschicht | Bedruckbarkeit | Schrumpf bei 90°C |
|---|---|---|---|
| Schrumpffolie EVA/PVDC/EVA | 93 °C | 32 dyn/cm | 40-50% |
| Schrumpffolie PE/EVOH/PE | 118 °C | 32 dyn/cm | 30-40% |
| Deckelfolie PP/EVOH/PP | 164 °C | 32 dyn/cm | 5-15% |
| Deckelfolie PET/PE/EVOH/PE | 250 °C | 43 dyn/cm | 10-20% |
| Deckelfolie PET/PE/PA/EVOH/PA | 250 °C | 43 dyn/cm | 5-15% |

Darüber hinaus sind dem Fachmann aus den Dokumenten US 2017/321 024 A1 und US 2010/003 433 A1 gattungsgemäße mehrschichtige, coextrudierte, bi-axial verstreckte und relaxierte Verbundfolien sowie Verfahren zu deren Herstellung bekannt.

Es fehlen jedoch bis dato mehrschichtige Barrierefolien, welche mittels Coextrusion und biaxialer Verstreckung hergestellt wurden, und welche einen verhältnismäßig kleinen bzw. keinen Schrumpf (weniger als 5 %, vorzugsweise weniger als 3 %), jeweils in der Maschinenrichtung (MD) und in der Querrichtung (TD), und eine hinreichende Barriere, Siegelbarkeit, Wärmebeständigkeit, mechanische Festigkeit und Bedruckbarkeit aufweisen.

Aufgabe der Erfindung

Es ist daher eine Aufgabe der vorliegenden Erfindung, ein Verfahren zur Herstellung einer coextrudierten und biaxial verstreckten Verbundfolie, vorzugsweise einer coextrudierten und biaxial verstreckten Mehrschicht-Barrierefolie, und eine daraus resultierende Mehrschichtfolie, vorzugsweise Mehrschicht-Barrierefolie, bereitzustellen, welche wenigstens eine der nachfolgenden Eigenschaften, besser alle der nachfolgenden Eigenschaften, aufweist: hinreichende Sauerstoff- und/oder Wasserdampf-Barriere, Siegelbarkeit, Wärmebeständigkeit, Bedruckbarkeit und mechanische Festigkeit auch ohne weiteren Laminierprozess. Die daraus resultierende Mehrschicht-Barrierefolie soll ferner einen verhältnismäßig kleinen bzw. keinen Schrumpf (kleiner 5 %, vorzugsweise weniger als 3 %) jeweils in der Maschinenrichtung (MD) und in der Querrichtung (TD) aufweisen.

Offenbarung der Erfindung

Die vorstehend definierte Aufgabe wird durch die Gegenstände der unabhängigen Ansprüche gelöst. Vorteilhafte Ausführungsformen der vorliegenden Erfindung sind Gegenstand der abhängigen Ansprüche.
Aus dem Stand der Technik sowie der Verwendung in der Praxis hat sich erwiesen, dass sich zur Erzielung einer bestmöglichen Bedruckbarkeit und zum Erhalt der höchstmöglichen Wärmebeständigkeit Materialien wie PET und PA in der Außenschicht bewährt haben. Aber auch Materialien wie PLA oder EVOH sind aus Sicht der Bedruckbarkeit, Wärmebeständigkeit, Weiterverarbeitbarkeit weitaus besser geeignet als auf Polyolefin basierende Rohrstoffe wie PE oder PP.

| Rohstoff | Wärmebeständigkeit Schmelzetemperatur DSG (ISO 11357) |
|---|---|
| Homo-PET | 250 °C |
| PA6 | 220 °C |
| PLA | 210 °C |
| EVOH (32 Mol-%) | 183 °C |
| HD-PE | 131 °C |
| Homo-PP | 164 °C |

| Rohstoff | EVA 28% | EVA 18% | EVA 12% | LLDPE | mLLDPE | random Co-PP | Co-PP | EVOH | PLA | PA6.66 | PA6 | Co-PET | homo PET |
|---|---|---|---|---|---|---|---|---|---|---|---|---|---|
| **VST** (°C) DIN EN ISO 306 | 40-50 | 60-70 | 70-85 | 100-120 | 100-120 | 100-120 | 120-140 | 155-175 | 160-180 | 180-200 | 190-210 | 210-230 | 240-260 |

| Rohstoff | Bedruckbarkeit bzw. Polarität Oberflächenspannung (dyn/cm) |
|---|---|
| PE | 30-32 |
| PP | 30-32 |
| PET | 43 |
| PA | 43 |

Zur Erlangung der ausreichenden Barriere gegen Sauerstoff oder Gas haben sich Rohstoffe wie PET, PA, EVOH, PVOH und PVDC etabliert.

| Rohstoff | Sauerstoffbarriere | |
|---|---|---|
| | 65% rel. Feuchte | 80% rel. Feuchte |
| | $\dfrac{cm^3}{m^2 * d * bar}$ | $\dfrac{cm^3}{m^2 * d * bar}$ |
| EVOH (PE 32 Mol-%) | 0,5 | 1,2 |
| EVOH (PE 44 Mol-%) | 1 | 2,3 |
| PVDC (Extrusionsharz) | 4 | 4 |
| PVDC (Dispersionsharz) | 10 | 10 |
| PAN | 8 | 10 |
| PET | 50 | 50 |
| PA6 | 35 | 50 |
| PVC | 240 | 240 |
| PE-HD | 2500 | 2500 |
| PP | 3000 | 3000 |
| PE-LD | 10000 | 10000 |
| EVA | 18000 | 18000 |

Quelle: Sauerstoffdurchlässigkeit bei 20°C, gemessen bei verschiedenen Barrierekunststoffen (nach Kyoichiro; aus: Joachim Nentwig, Kunststoff-Folien, 3. Auflage, 2006, Carl Hanser Verlag; Tabelle 26)

Aber wie unter Fachleuten bekannt, ist die Barriereeigenschaft der meisten dieser Rohstoffe nur dann ausreichend, wenn sie entsprechend vor Feuchtigkeit geschützt sind.

Daher werden diese Rohstoffe, sofern sie Barriere bieten sollen, immer in einer der mittleren bzw. innenliegenden Schichten einer Folie eingesetzt.

Um eine möglichst optimale Siegelbarkeit zu erhalten, sind, wie aus der Praxis bekannt, in jedem Fall auf Polyolefin basierende Rohstoffe, wie z.B. PE oder PP, oder ähnliche zu verwenden, welche eine möglichst niedrige Siegeltemperatur bzw. Schmelzetemperatur aufweisen.

| Rohstoff | Schmelzetemperatur von Siegelmaterialien (ASTM D3418) |
|---|---|
| EVA 12% | 93 °C |
| EVA 18% | 84 °C |
| POP | 95 °C |
| mLLDPE | 118 °C |
| RaCoPP | 132°C |

Auffällig ist, dass die idealerweise zur Erlangung von Eigenschaften wie Wärmebeständigkeit, Bedruckbarkeit sowie der Sauerstoff-Barriere zum Einsatz kommenden Rohstoffe darüber hinaus auch eine wesentlich höhere Festigkeit, insbesondere nach einer biaxialen Verstreckung, mit sich bringen, als dies Polyolefine auch trotz biaxialer Verstreckung nur annähernd in der Lage sind.

In einem optimalen Schichtaufbau sollte folglich die Sauerstoff-Barriereschicht aus EVOH, PVOH oder PA bestehen und in einer der mittleren bzw. zwischenliegenden Schichten angeordnet sein und die Siegelschicht, bestehend aus einem heißsiegelbaren Polyolefin, in der Innenschicht.

Die Außenschicht sollte durch eines der hierfür idealen wärmebeständigen und bedruckbaren Materialien wie z.B. PET oder PA ausgebildet sein.

Bei genauerer Betrachtung der für die Eigenschaften wie Wärmebeständigkeit, Bedruckbarkeit, Sauerstoff-Barriere sowie der Festigkeit vorteilhaften Materialien, fällt auf, daß alle Materialien verschiedene Gemeinsamkeiten aufweisen, so haben allesamt eine Dichte von mehr als 1,0 g/cm$^3$, es sind alles polare Materialien, und sie weisen nahezu alle eine Schmelzetemperatur von über 170 °C auf.

Bei weiterer Betrachtung der vorzugsweise als Siegelschicht einzusetzenden Rohstoffe fällt auch auf, dass sie allesamt eine Dichte von weniger als 0,95 g/cm$^3$ und eine Schmelzetemperatur < 120°C aufweisen.

| Rohstoff | Dichte (g/cm$^3$) |
|---|---|
| PET | 1,33 bis 1,4 |
| PA | 1,12 bis 1,14 |
| PLA | 0,124 bis 0,125 |
| EVOH | 1,12 bis 1,22 |
| PE | 0,89 bis 0,96 |
| PP | 0,895 bis 0,915 |

Nicht alle dieser Rohstoffe mit einer Dichte von mehr als 1,0 g/cm$^3$ sind gleichermaßen ideal bedruckbar, wie PA oder PET, oder wärmebeständig wie PET oder PA. Es weisen auch nicht alle gleichermaßen eine hohe Sauerstoff-Barriere wie EVOH, PVOH oder PA auf, noch sind sie alle gleichermaßen festigkeitssteigernd wie PA oder PET. Aber allesamt weisen in jedem der einzelnen Eigenschaften und erst recht, wenn sie in einer Verbundfolie zusammenwirken, insbesondere nach biaxialer Verstreckung, deutlich verbesserte Eigenschaften auf, als jeglicher auf Polyolefin basierender Rohstoff.

Aufgrund der unterschiedlich optimalen Ausprägung der Rohstoffe mit einer Dichte von mehr als 1,0 g/cm$^3$ hinsichtlich ihrer Wärmebeständigkeit, Bedruckbarkeit sowie der Sauerstoff-Barriere und der sich daraus idealerweise bzw. vorzugsweise ergebenden Aufteilung auf wenigstens zwei getrennte Schichten, ergibt diese Aufteilung einen weiteren, sehr positiven Effekt, nämlich eine teils deutliche Zunahme der Festigkeit und Steifigkeit der Folie.

Dieser Effekt wird umso ausgeprägter, je weiter die beiden Schichten, welche einen Rohstoff mit einer Dichte von mehr als 1,0 g/cm$^3$ enthalten, in dem Gesamtverbund der Schichten voneinander entfernt sind.

Es gilt daher, einen Schichtaufbau zu wählen, welcher zum einen zumindest zwei unabhängige Schichten mit einer Dichte von mehr als 1,0 g/cm$^3$ aufweist, wobei eine dieser Schichten die Außenschicht und die andere eine zwischenliegende Schicht bildet. Zum anderen soll die Verbundfolie eine heißsiegelbare Schicht enthalten, welche die Innenschicht ausbildet und aus einem Material, bevorzugt ein Polyolefin, mit einer Dichte von weniger als 0,95 g/cm$^3$ und einer Schmelzetemperatur von weniger als 120 °C besteht.

Ein solcher Schichtaufbau löst zwar in hervorragender Weise die Summe aller gewünschten Eigenschaften (insbesondere hinreichende Sauerstoff- und/oder Wasserdampf-Barriere, Siegelbarkeit, Wärmebeständigkeit, Bedruckbarkeit und mechanische Festigkeit), insbesondere nach einer biaxialen Verstreckung, allerdings ist die Einstellung des gewünscht niedrigen Schrumpfs, insbesondere nach einer biaxialen Verstreckung, damit noch nicht gelöst.

Dies ist allein rohstoffseitig nicht zu lösen, zumindest nicht, wenn die hergestellte Folie einer biaxialen Verstreckung unterzogen wurde. Hierzu sind ein geeignetes Herstellungsverfahren und/oder eine geeignete Behandlung, welche diese Aufgabe erfüllt, erforderlich.

Gerade nach einer Verstreckung, insbesondere nach einer biaxialen Verstreckung, weisen Polymere bzw. Folien aus Polymeren einen zum Teil erheblichen Schrumpf auf. Dieser ist je nach Polymer unterschiedlich stark ausgeprägt und im Wesentlichen davon abhängig, ob und wieviel Wärme bzw. Temperatur auf die Folie einwirkt.

D.h., grundsätzlich gilt, je höher die einwirkende Temperatur und je länger die Dauer der Einwirkung ist, desto höher ist der Schrumpf der Folie.

Aus dem Stand der Technik sind Prozesse bzw. Behandlungen bekannt, welche bei monoaxial, aber auch besonders bei biaxial verstreckten Folien zur Anwendung kommen, um den Schrumpf aus den verstreckten Folien zu reduzieren.

So sind speziell bei monoaxial verstreckten Folien, aber auch bei biaxial verstreckten Folien, Nachbehandlungen, d.h. nach dem Verstreckungsprozess angeordnet, bekannt, bei welcher die Folien über temperierte Walzen (sog. Temperierwalzen) mit einer möglichst hohen Umschlingung geführt werden. Hierdurch wird Wärme bzw. Temperatur in die Folie eingebracht, d.h. thermisch fixiert, und somit der verbleibende Schrumpf reduziert.

Aus der Verstreckung von Flachfolien, dem sog. Tenter Frame Prozess, sind darüber hinaus Nachbehandlungen (Temperierungen), auch Thermofixierungen (thermisch fixierend) genannt, bekannt, wobei die Folie nach der Verstreckung durch einen nachgeschalteten Heizofen horizontal hindurch geführt wird und dabei mit heißer Luft behandelt, und hierdurch der Schrumpf reduziert wird.

Ferner sind thermische Nachbehandlungen im Anschluss an eine Verstreckung auch aus dem sog. Triple Bubble- bzw. dem Multibubbleprozess bei schlauchförmigen Folien bekannt. Hierbei werden die Folien in Schlauchform durch einen Ofen geführt und mit Temperatur behandelt, in den meisten Fällen, wie auch beim Tenter Frame Prozess, mittels Heißluft. Alternativ kommt beim Triple Bubble Prozess auch eine Behandlung der Folie mit Infrarot oder aber auch mit Heißwasserdampf zum Einsatz, um den in der Verstreckung herbeigeführten Schrumpf zu reduzieren.

So sind verschiedene Technologien im Anschluss an eine biaxiale Verstreckung bekannt, welche mittels Temperatureinbringung den Schrumpf reduzieren. Neben der Höhe der eingebrachten Temperatur ist aber auch hier die Zeit bzw. Dauer der Temperatureinwirkung ein wesentlicher Faktor.

Eine ausschließliche Behandlung der Folie mit Wärme/Temperatur, um den Schrumpf in den Folien nicht nur zu reduzieren, sondern sogar komplett zu eliminieren, ist aber nur bei wenigen Folientypen zielführend und ausreichend.

So sind die im Tenter Frame Prozess hergestellten Folien, wie BoPET, BoPA oder BoPP (Bo = biaxial oriented = biaxial verstreckt), mittels einer sehr hohen Wärmebehandlung (Thermofixierung) so stabilisiert, daß sie nur sehr wenig bis gar keinen Schrumpf mehr enthalten.

Ähnlich verhält es sich bei bestimmten Folientypen, welche im Double Bubble Prozeß biaxial verstreckt und im Nachgang mittels Temperierwalzen oder mittels eines horizontalen Heißluftofens thermisch fixiert wurden. So sind auch hier gerade BoPP- oder aber auch BoPA-Folien oftmals ausschließlich nur mittels Temperatur behandelt bzw. fixiert und zeigen danach keinen oder nur sehr wenig Schrumpf.

Dies liegt im Wesentlichen daran, dass es sich bei diesen Folientypen unabhängig vom Verstreckungsprozess um sortenreine Folien handelt, bei welchen ausschließlich nur eine Art/Sorte von Rohstoff zum Einsatz kommt, BoPET (ausschließlich PET), BoPA (ausschließlich PA), BoPP (ausschließlich PP).

Hierbei kann eine dem Rohstoff entsprechend hohe Thermofixiertemperatur, bis knapp unter den Erweichungspunkt oder aber Schmelzepunkt, zum Stabilisieren gewählt werden und somit allein durch die Temperaturbehandlung der Schrumpf stark reduziert oder gar eliminiert werden.

Als unmöglich galt dies bislang jedoch bei Folientypen, bestehend aus verschiedenen Rohstoffen, d.h. verschiedenen Sorten von Rohstoffen, speziell bei Rohstoffen mit stark unterschiedlichen Erweichungs- oder Schmelzetemperaturen.

So sind aus der Praxis keine coextrudierten und biaxial verstreckten Folien bekannt, welche eine Kombination aus verschiedenen Rohstoffen mit stark unterschiedlichen Erweichungs- oder Schmelzetemperaturen enthalten und darüber hinaus trotz Verstreckung keinen bzw. nur einen sehr geringen Schrumpf aufweisen.

Ausnahmen hierzu stellen vereinzelte, mittels Tenter Frame Prozess oder Double Bubble Prozess hergestellte, mehrschichtige Folien dar. Hierbei handelt es sich im Wesentlichen um nachfolgenden Schichtaufbau (von innen nach außen; HV = Haftvermittler):

PP-HV-EVOH-HV-PP

Da hierbei nahezu ausschließlich HomoPP (homopolymeres PP; Schmelzetemperatur: 155 bis 165 °C) im Zusammenspiel mit EVOH und hierbei EVOH-Typen mit hohem Ethylengehalt, welche eine niedrigere Schmelzetemperatur im Vergleich zu denen mit geringem Ethylengehalt aufweisen (Schmelzetemperatur: 170 bis 180 °C) zum Einsatz kommen, lassen sich diese Verbunde in der Tat bei ähnlichen Temperaturen nahezu ausschließlich durch Wärmebehandlung stabilisieren und der Schrumpf reduzieren oder eliminieren.

Allerdings weisen diese Mehrschichtfolien basierend auf PP, der überwiegende Anteil besteht aus PP, allesamt eben nicht die angestrebte Wärmebeständigkeit und erst recht nicht die erforderliche Bedruckbarkeit auf.

Da selbst die wärmebeständigsten HomoPP-Typen in jedem Fall unter 170 °C aufschmelzen und es sich darüber hinaus bei PP um einen der unpolarsten Rohstoffe handelt, welcher ohne eine weitere Nachbehandlung für eine Bedruckung gänzlich ungeeignet ist, kommt PP bei der Wahl des idealerweise zu verwenden Rohstoffs in der Außenschicht eher nicht in Frage.

Darüber hinaus weisen diese auf PP basierenden Mehrschichtfolien, wie im Markt bekannt, aufgrund der verwendeten PP-Typen und der grundsätzlich schlechteren Siegeleigenschaften im Vergleich zu bevorzugt verwendeten Rohstoffen wie PE, eine nur sehr schlechte oder mäßige Siegelbarkeit, d.h. eine relativ hohe Siegeltemperatur auf. Daher werden diese Folien herkömmlich in der Regel nachträglich mit auf PE basierenden Folien laminiert.

Folglich gilt eine mehrschichtige, coextrudierte und im Anschluss biaxial verstreckte Folie, welche eine Siegelschicht mit niedriger Schmelzetemperatur aufweist, welche nicht nachträglich auflaminiert wurde, darüber hinaus eine wärmebeständige und bedruckbare (polare) Außenschicht sowie eine in den mittleren Schichten liegende Sauerstoff-Barriereschicht enthält und keinen bzw. einen minimalen Schrumpf aufweist, derzeit als nicht herstellbar.

Dies ist darauf zurück zu führen, dass solche Mehrschichtverbunde bei der zur Eliminierung bzw. zur Reduzierung des Schrumpfs unter 5 %, oder besser sogar unter 3%, erforderlichen Behandlung mit entsprechender Temperatur ohne weitere Maßnahmen am Prozess nicht oder nicht stabil herstellbar sind.

So kommt es bereits vor dem Erreichen der zum Eliminieren des Schrumpfs erforderlichen Temperatur zum Erweichen bzw. sogar zum Schmelzen einzelner Schichten im Mehrschichtverbund und damit zwangsläufig zu einer Unterbrechung, zumindest aber zu einer massiven Beeinträchtigung, des Herstellungsprozesses der Folie.

Wann bzw. bei welcher Temperatur es zu Prozessbeeinträchtigungen oder sogar Unterbrechungen kommt, hängt dabei im Wesentlichen davon ab, ob und wieviel Schichtanteile des gesamten Folienverbunds aus nicht auf Polyolefin basierenden Materialien, d.h. temperaturbeständigen Materialien, mit einer Dichte > 1,00 g/cm$^3$ und einer Schmelzetemperatur größer 170 °C bestehen.

Liegt der Massenanteil der Materialien mit einer Dichte > 1,00 g/cm$^3$ bei über 40 % bezogen auf die Gesamtmasse des Schichtaufbaus der Folie, so lässt die Verbundfolie auch eine Behandlung (Thermofixierung) mit Temperaturen von 80 bis 100 °C zu, bei einem Massenanteil von 50 % und mehr sogar darüber hinaus.

Aber auch bei einem hohen Massenanteil der Materialien mit einer Dichte > 1,00 g/cm$^3$ von 40 % und mehr kommt es, solange der Folienverbund eine Siegelschicht auf Polyolefin basierenden Rohstoffen mit einer Dichte < 0,95 g/cm$^3$ und mit einer Schmelzetemperatur kleiner 120 °C enthält, vor Erreichen eines Restschrumpfs von unter 5%, jeweils in MD und TD, immer zu Prozessbeeinträchtigungen oder Unterbrechungen, da die hierfür benötigten Temperaturen zur Thermofixierung der Folien zumindest zwischen 120 und 150 °C liegen müssen, und hierbei selbst die Materialien mit einer Dichte > 1,00 g/cm$^3$ und mit Schmelzetemperaturen größer 170 °C nicht mehr ausreichend sind, um den Herstellungsprozess stabil zu halten.

Um den Herstellungsprozess der Folie nicht zu beeinträchtigen, können folglich nur Temperaturen in der thermischen Nachbehandlung gewählt werden, welche den Schrumpf eben nicht vollständig eliminieren.

Um den Schrumpf trotzdem auf ein Minimum zu reduzieren oder gar komplett zu eliminieren, ist erfindungsgemäß ein weiterer Prozessschritt erforderlich. Neben der Behandlung biaxial verstreckter Folien mit Temperatur zur Eliminierung des Schrumpf, ist speziell im Triple Bubble- oder Multibubble-Prozeß ein weiterer Prozessschritt, nämlich die sog. Relaxion, verbreitet. Hierbei wird die Folie im Anschluss an die Verstreckung wieder kontrolliert zurück schrumpfen gelassen, dies bezeichnet man als Relaxion und erfolgt unter Einbringung von Temperatur bzw. Wärme.

Die Relaxion kann hierbei in beiden Richtungen, d.h. sowohl in Produktionsrichtung bzw. Maschinenrichtung (MD) als auch in Querrichtung zur Produktion (TD) erfolgen.

Die Relaxion kann in beide Richtungen (MD und TD) gleichermaßen oder aber auch in unterschiedlicher Art (Ausprägung) in der einen oder anderen Richtung erfolgen.

Darüber hinaus ist auch eine Relaxion in nur eine Richtung, also nur in MD oder TD möglich. Die Wahl der Relaxionsrichtung kann immer unabhängig voneinander geschehen. Die quantitative Ausprägung der Relaxion wird im Rahmen der vorliegenden Erfindung durch den sog. Relaxationsfaktor, wie nachstehend näher definiert, ausgedrückt.

Aber auch eine Relaxion der Folie alleine reduziert den Schrumpf nicht ausreichend, und auf keinen Fall kann der Schrumpf sogar komplett eliminiert werden.

Dies ist darauf zurück zu führen, dass die Folien (Schrumpffolien/Deckelfolien) bei der Relaxion herkömmlich lediglich mit Temperaturen von max. bis zu 60 bis 80 °C behandelt bzw. fixiert werden, da diese relativ niedrigen Temperaturen bereits ausreichend sind, um ein kontrolliertes Zurückschrumpfen der Folien zu erzielen und den verbleibenden Schrumpf auf Werte um 10 bis 20 %, jeweils in MD und TD, bestenfalls jedoch auf > 5 bis 10 % in eine der beiden Richtungen zu reduzieren.

Niedrigere Schrumpfwerte sind bisher nicht erreichbar, da weder die bei diesen Bedingungen (Temperaturen) erzielbare Relaxion, noch die einwirkende Temperatur ausreichend für eine Reduktion des Schrumpfs auf unter 5 %, jeweils in MD und TD, sind.

Die Höhe der realisierbaren Relaxion hängt im Wesentlichen von der Höhe der Temperatur ab, mit welcher die Folie behandelt bzw. fixiert wird.

So ist eine möglichst hohe Relaxion, welche sich weiter positiv auf den verbleibenden Restschrumpf auswirkt, d.h., den Restschrumpf weiter senkt, nur mit entsprechend hohen Temperaturen in der Folienbehandlung (Thermofixierung) zu erzielen.

Hierbei ergibt sich aber wiederum das gleiche Problem, wie vorher beschrieben, dass es bei der Behandlung von Folien, insbesondere von Folien, welche Kombinationen von Rohstoffen mit stark unterschiedlichen Schmelzetemperaturen enthalten, mit den zum Eliminieren des Schrumpfs erforderlichen Temperaturen zum Erweichen oder sogar Schmelzen einzelner Schichten und somit zwangsläufig zu einer Unterbrechung, zumindest aber zu einer massiven Beeinträchtigung des Herstellungsprozesses der Folie kommt.

Auch bei der Behandlung der Folie mit einer Kombination aus Temperatur und Relaxion ist wiederum der Temperaturbereich, bei welchem es zu Beeinträchtigungen oder Unterbrechungen des Herstellungsprozesses kommt, davon abhängig, wie hoch der Massenanteil der Materialien (Dichte > 1,00 g/cm$^3$) in dem Schichtaufbau der Folie ist.

Aber überraschender Weise zeigt sich, dass der Anteil der enthaltenen, Materialien (Dichte > 1,00 g/cm$^3$) bei entsprechender Relaxierung deutlich geringer ausfallen kann, als bei ausschließlicher Temperaturbehandlung ohne Relaxion.

So kann bei entsprechender Relaxion eine Behandlung bei deutlich höherer Temperatur, in jedem Fall über 60 °C, vorzugsweise über 70 °C, insbesondere über 80 °C, bis hin zu Temperaturen von 180 °C, vorzugsweise bis 150 °C, insbesondere bis 120 °C, angewendet werden, bei gleichzeitiger Reduktion der Materialien (thermoplastisches Harz mit einer Dichte > 1,00 g/cm$^3$) auf einen Massenanteil in jedem Fall unter 20 %, bis hin zu einem Massenanteil von sogar kleiner 10 %, bezogen auf die Gesamtmasse des Schichtaufbaus der Folie. Dabei beträgt der Massenanteil des thermoplastischen Harzes mit einer Dichte > 1,00 g/cm$^3$ bezogen auf die Gesamtmasse des Schichtaufbaus der Folie wenigstens 1 %, vorzugsweise wenigstens 5 %.

Beim erfindungsgemäßen Verfahren wird daher die Temperatur der Verbundfolie während des Relaxierens vorzugsweise auf einen der folgenden Bereiche eingestellt: 60 bis 180 °C, bevorzugt 60 bis 150 °C, besonders bevorzugt 60 bis 120 °C, ganz besonders bevorzugt 80 bis 100 °C.

Wesentlich für das erfindungsgemäße Verfahren ist, dass die Summe aus dem Relaxationsfaktor in der Maschinenrichtung (MD) und dem Relaxationsfaktor in der Querrichtung (TD) wenigstens 0,05 (= 5 %), vorzugsweise wenigstens 0,1 (= 10 %), vorzugsweise wenigstens 0,2 (= 20 %), insbesondere wenigstens 0,4 (= 40 %), beträgt. Dabei ist der Relaxationsfaktor in der Maschinenrichtung und der Relaxationsfaktor in der Querrichtung jeweils wenigstens größer als 0,00.

Folglich sind die Relaxationsfaktoren neben der eingebrachten Fixiertemperatur (Temperatur der Verbundfolie während des Relaxierens) entscheidende Faktoren, um den bei der Verstreckung der Folie eingebrachten Schrumpf wieder zu reduzieren bzw. eliminieren.

Im Rahmen der vorliegenden Erfindung hat es sich somit als zielführend erwiesen, die bei der Verstreckung in die Folie eingebrachte Dehnung bzw. Längung der Folie wieder kontrolliert zu reduzieren bzw. relaxieren.

Betrachtet man die Summe der Prozessschritte einschließlich der Verstreckung und der anschließenden Relaxion, so ergibt sich nach beiden Prozessschritten eine Restdehnung bzw. Restlängung in der Folie. Dabei kann ein Restverstreckungsfaktor ermittelt werden, welcher nachfolgend im Detail definiert ist und welcher auf dem Verhältnis einer Länge eines Abschnitts der Verbundfolie nach dem Verstrecken und nach dem Relaxieren zu einer Länge desselben Abschnitts vor dem Verstrecken und vor dem Relaxieren basiert.

Da der Restverstreckungsfaktor sich aus beiden Prozessen (Verstreckung und Relaxion) gleichermaßen ergibt, lässt er sich idealerweise auch gleichermaßen durch beide Prozesse beeinflussen bzw. verändern.

Bei genauerer Betrachtung dieser Abhängigkeit stellt sich heraus, dass auch eine Reduktion der Verstreckung bei ansonsten gleichen Bedingungen einen Effekt ähnlich wie eine spätere Relaxion der Folie ergibt, d.h., bei geringerer Verstreckung kann auch mit geringerer Relaxion ein sehr geringer Schrumpf erzielt werden und mit hoher Verstreckung ist wiederum eine hohe Relaxion erforderlich, um den Schrumpf gering zu halten, aber überraschenderweise ist grundsätzlich der Einfluss des Relaxationsfaktors deutlich höher als der des Verstreckungsfaktors.

Trotzdem ist nicht alleine die Relaxion, sondern vielmehr die Summe bzw. der Faktor aus beiden Prozessschritten entscheidend.

Somit bestimmen der Restverstreckungsfaktor und natürlich die in der Relaxion eingebrachte Temperatur wesentlich, ob und wieviel Schrumpf in der Folie verbleiben.

Da nicht nur der Relaxionsprozess und die darin eingebrachte Temperatur, sondern auch der Verstreckungsprozess einen wesentlichen Einfluss auf den verbleibenden Restschrumpf haben und der Verstreckungsprozess ebenfalls einer Temperaturbehandlung unterliegt, ist der Einfluss hieraus ebenfalls zu betrachten.

In der Tat ist auch hierbei eine Beeinflussung erkennbar, d.h. bei niedrigen Verstreckungstemperaturen, ohne gleichzeitige Veränderung anderer Prozessparameter, ergibt sich ein höherer verbleibender Schrumpf als demgegenüber mit höheren Verstreckungstemperaturen.

Im Vergleich zur Relaxion, ist jedoch der Verstreckungsprozess deutlich sensibler, d.h., die benötigten Temperaturen, um überhaupt einen stabilen Prozess zu erhalten, liegen oftmals in einem Temperaturfenster von lediglich +/- 2 bis 3 °C. Daher ist der zu variierende Temperaturbereich hierbei kleiner bzw. limitiert.

Außerdem ist der Einfluss der Temperatur der Verbundfolie während der Verstreckung nach der Erkenntnis der Erfinder eher gering.

Die Temperatur während der Verstreckung der Verbundfolie ist somit ein Einflussfaktor, aber nicht von gleicher entscheidender Bedeutung wie die Temperatur in der Relaxion oder aber der Verstreckungsfaktor sowie der Relaxationsfaktor bzw. der Restverstreckungsfaktor.

Bei weiterer genauerer Betrachtung der Prozessschritte und deren Einfluss verbleibt ein weiterer wesentlicher Faktor, nämlich die Zeit bzw. die Dauer, welche die Folie den einzelnen Prozessschritten und den darin vorherrschenden Bedingungen ausgesetzt ist.

Es zeigt sich allerdings, dass der Einfluss des Zeitfaktors im Verstreckungsprozess gegenüber dem Einfluss der Temperatur und des Verstreckungsfaktors eher zu vernachlässigen ist.

Demgegenüber stellt sich heraus, dass im Relaxionsprozess die Zeit (Dauer) der Relaxion mindestens von gleicher Bedeutung sein kann, wie der Relaxationsfaktor und die vorherrschende Temperatur.

Hierbei kristallisiert sich heraus, dass das Zusammenspiel von Zeit (Dauer) und Relaxationsfaktor weniger erheblich ist, als die Zeit (Dauer) in Verbindung mit der Temperatur, d.h. genauer gesagt, die Dauer, welcher die Folie der Temperatur während des Relaxierens ausgesetzt wird.

Je länger die Dauer der Temperaturbehandlung, desto größer der Einfluss und damit die Verringerung des Restschrumpfs.

Es zeigt sich aber auch, dass dies nicht unendlich zu steigern ist, sondern vielmehr nach einer gewissen Dauer unter Temperatureinwirkung keine weitere Steigerung, d.h. Schrumpfreduktion, mehr realisierbar ist und eine Art Sättigung einsetzt.

Viel entscheidender ist allerdings, welche Dauer die Folie wenigstens/mindestens unter Temperatureinwirkung steht, so ist hierbei eine Dauer bzw. Verweilzeit unter Temperatur von mindestens 2 Sekunden erforderlich, um einen gewünschten Einfluss zu erkennen.

So ist das erfindungsgemäße Verfahren dahingehend beschränkt, dass die Verbundfolie während des Relaxierens eine Temperatur in einem der vorstehend genannten Temperaturbereiche für eine vorbestimmte Zeitdauer aufweist (eine sogenannte "Verweilzeit unter Temperatur"). So muss eine Dauer des Relaxierens oder eine Verweilzeit während des Relaxierens unter Temperatur wenigstens 2 Sekunden, insbesondere mehr als 5 Sekunden, betragen. Dabei ist die Dauer des Relaxierens oder die Verweilzeit während des Relaxierens unter Temperatur auf höchstens 30 Sekunden, vorzugsweise höchstens 20 Sekunden, insbesondere höchstens 10 Sekunden, beschränkt.

Genau so wenig wie die Temperatur oder die Relaxion alleine einen entsprechend niedrigen Schrumpf herbeiführen, kann dies die Verweilzeit unter Temperatur alleine bewirken. Diese Einflussgrößen und die damit erzielte Wirkung stehen in einer Abhängigkeit zueinander und beeinflussen sich gegenseitig.

So ist der verbleibende Restschrumpf der Folie gering bei hoher Temperaturbehandlung und gleichzeitiger hoher Relaxion trotz kurzer Verweilzeit unter Temperatur.

Der verbleibende Restschrumpf der Folie ist aber auch gering bei hoher Temperaturbehandlung und langer Verweilzeit unter Temperatur trotz geringer Relaxion.

Der verbleibende Restschrumpf der Folie ist ebenso gering bei langer Verweilzeit unter Temperatur und hoher Relaxion trotz mäßiger Temperaturbehandlung.

Es ist also vielmehr nur die Kombination dieser Einflussgrößen, durch welche der gewünscht niedrige verbleibende Restschrumpf der Folie erzielt werden kann.

**erfindungsgemäße Folien**

**FOLIE 1:** PET(15%)/HV/PE/HV/PA(20%)/EVOH(5%)/PA(20%)/HV/PE; %-Angaben in Massenprozent der Gesamtmasse der Verbundfolie; Materialanteil mit einer Dichte >1,0 g/cm³ >50%; Fixiertemperatur = Temperatur der Verbundfolie während des Relaxierens

| Verstreckungsfaktor (TDxMD) | Relaxationsfaktor (TDxMD) (%) | Höhe der Relaxion | Restverstreckungsfaktor (TDxMD) | Fixiertemperatur* (°C) | Höhe der Fixiertemp. | Verweilzeit während Relaxieren (sec) | Länge der Verweilzeit | Schrumpf nach Verstrecken und Relaxieren (TDxMD) (%) |
|---|---|---|---|---|---|---|---|---|
| 3,4 × 2,6 | 5 × 1 | → | 3,23 × 2,57 | 120 | ↗ | 5 | ↗ | 19 × 17 |
| 3,4 × 2,6 | 40 × 20 | ← | 2,04 × 2,08 | 120 | ↗ | 5 | ↗ | 0 × 0,5 |
| 3,4 × 2,6 | 20 × 5 | ↗ | 2,72 × 2,47 | 60 | ↘ | 5 | ↗ | 17 × 14 |
| 3,4 × 2,6 | 20 × 5 | ↗ | 2,72 × 2,47 | 180 | ← | 5 | ↗ | kein stabiler Prozess |
| 3,4 × 2,6 | 20 × 5 | ↗ | 2,72 × 2,47 | 120 | ↗ | 2 | → | 9 × 8 |
| 3,4 × 2,6 | 20 × 5 | ↗ | 2,72 × 2,47 | 120 | ↘ | 9 | ← | 0,5 × 0,5 |
| 3,4 × 2,6 | 5 × 1 | → | 3,23 × 2,57 | 60 | ↘ | 2 | → | 46 × 42 |
| 3,4 × 2,6 | 20 × 5 | ↗ | 2,72 × 2,47 | 120 | ↗ | 5 | ↗ | 2 × 1 |
| 3,4 × 2,6 | 40 × 20 | ← | 2,04 × 2,08 | 180 | ← | 9 | ← | 0 × 0 |

**Folie 2:** PET(10%)/HV/ PET(10%)/HV/PE/HV/PA(10%)/EVOH(5%)/PA(10%)/HV/PE; %-Angaben in Massenprozent der Gesamtmasse der Verbundfolie; Materialanteil mit einer Dichte >1,0 g/cm³ <40%; Fixiertemperatur = Temperatur der Verbundfolie während des Relaxierens

| Verstreckungsfaktor (TDxMD) | Relaxationsfaktor (TDxMD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweilzeit | Schrumpf nach Verstrecken und Relaxieren (TDxMD) (%) |
|---|---|---|---|---|---|---|---|---|
| 3,4 × 2,6 | 5 × 1 | → | 3,23 × 2,57 | 100 | ↗ | 5 | ↗ | 17 × 18 |
| 3,4 × 2,6 | 40 × 20 | ← | 2,04 × 2,08 | 100 | ↗ | 5 | ↗ | 0,5 × 0,5 |
| 3,4 × 2,6 | 20 × 5 | ↗ | 2,72 × 2,47 | 60 | ↘ | 5 | ↗ | 15 × 14 |
| 3,4 × 2,6 | 20 × 5 | ↗ | 2,72 × 2,47 | 150 | ← | 5 | ↗ | kein stabiler Prozess |
| 3,4 × 2,6 | 20 × 5 | ↗ | 2,72 × 2,47 | 100 | ↗ | 2 | → | 8 × 8 |

(fortgesetzt)

**Folie 2**: PET(10%)/HV/ PET(10%)/HV/PE/HV/PA(10%)/EVOH(5%)/PA(10%)/HV/PE; %-Angaben in Massenprozent der Gesamt masse der Verbundfolie; Materialanteil mit ein er Dichte >1,0 g/cm³ <40%; Fixie ertemperatur = Temperatur der Verbundfo olie während des Relaxi erens

| Verstrecku ngsfa ktor (TDxMD) | Relaxationsfaktor (TDxMD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweil zeit | Schrumpf nach Verstrecken und Relaxieren (TDxMD) (%) |
|---|---|---|---|---|---|---|---|---|
| 3,4 × 2,6 | 20 × 5 | → | 2,72 × 2,47 | 100 | → | 9 | ↑ | 0,5 × 1 |
| 3,4 × 2,6 | 5 × 1 | ↓ | 3,23 × 2,57 | 60 | ↓ | 2 | ↓ | 43 × 41 |
| 3,4 × 2,6 | 20 × 5 | → | 2,72 × 2,47 | 100 | | 5 | → | 1,5 × 2 |
| 3,4 × 2,6 | 40 × 20 | ↑ | 2,04 × 2,08 | 150 | ↑ | 9 | ↑ | 0 × 0 |

**Folie 3**: PA(10%)/HV/PP/ HV/PP/HV/EVOH(5%)/HV/ /PE; %-Anga ben in Massen prozent der G Gesamtmasse der Verbundf folie; Materialanteil mit einer Dichte >1,0 g/cm³ <20%; Fixie rtemperatur = Temp eratur der Verbundfolie während des Relaxierens

| Verstreckungsfa ktor (TDxMD) | Relaxationsfaktor (TDxMD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweil zeit | Schrumpf nach Verstrecken und Relaxieren (TDxMD) (%) |
|---|---|---|---|---|---|---|---|---|
| 3,5 × 2,8 | 5 × 1 | ↓ | 3,33 × 2,77 | 90 | → | 5 | → | 21 × 24 |
| 3,5 × 2,8 | 40 × 20 | ↑ | 2,1 × 2,24 | 90 | → | 5 | → | 0,5 × 1 |
| 3,5 × 2,8 | 20 × 5 | → | 2,8 × 2,66 | 60 | ↓ | 5 | → | 19 × 22 |
| 3,5 × 2,8 | 20 × 5 | → | 2,8 × 2,66 | 120 | ↑ | 5 | → | kein stabiler Prozess |
| 3,5 × 2,8 | 20 × 5 | → | 2,8 × 2,66 | 90 | → | 2 | ↓ | 9 × 11 |
| 3,5 × 2,8 | 20 × 5 | → | 2,8 × 2,66 | 90 | → | 9 | ↑ | 1 × 1,5 |
| 3,5 × 2,8 | 5 × 1 | ↓ | 3,33 × 2,77 | 60 | ↓ | 2 | ↓ | 45 × 47 |
| 3,5 × 2,8 | 20 × 5 | → | 2,8 × 2,66 | 90 | → | 5 | → | 2 × 2,5 |
| 3,5 × 2,8 | 40 × 20 | ↑ | 2,1 × 2,24 | 120 | ↑ | 9 | ↑ | 0 × 0 |

**Folie 4:** PET(5%)/HV/PE/HV/EVOH(5%)/HV/PE; %-Angaben in Massenprozent der Gesamtmasse der Verbundfolie; Materialanteil mit einer Dichte >10,2 g/cm$^3$ ≤10%; Fixiertemperatur = Temperatur der Verbundfolie während des Relaxierens

| Verstreckungsfa ktor (TDxMD) | Relaxationsfaktor (TD×MD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweil zeit | Schrumpf nach Verstrecken und Relaxieren (TDxMD) (%) |
|---|---|---|---|---|---|---|---|---|
| 3,5 × 3,0 | 5 × 1 | ↓ | 3,33 × 2,97 | 75 | → | 5 | → | 37 × 34 |
| 3,5 × 3,0 | 40 × 20 | ↑ | 2,1 × 2,4 | 75 | → | 5 | → | 1 × 1,5 |
| 3,5 × 3,0 | 20 × 5 | → | 2,8 × 2,85 | 60 | ↓ | 5 | → | 24 × 27 |
| 3,5 × 3,0 | 20 × 5 | → | 2,8 × 2,85 | 90 | ↑ | 5 | → | kein stabiler Prozess |
| 3,5 × 3,0 | 20 × 5 | → | 2,8 × 2,85 | 75 | → | 2 | ↓ | 12 × 14 |
| 3,5 × 3,0 | 20 × 5 | → | 2,8 × 2,85 | 75 | → | 9 | ↑ | 2 × 2,5 |
| 3,5 × 3,0 | 5 × 1 | ↓ | 3,33 × 2,97 | 60 | ↓ | 2 | ↓ | 54 × 51 |
| 3,5 × 3,0 | 20 × 5 | → | 2,8 × 2,85 | 75 | → | 5 | → | 3 × 4 |
| 3,5 × 3,0 | 40 × 20 | ↑ | 2,1 × 2,4 | 90 | ↑ | 9 | ↑ | 0 × 0 |

**Folie 5:** PP/HV/EVOH(5%)/HV/PE; %-Angaben in Massenprozent der Gesamtmasse der Verbundfolie; Materialanteil mit einer Dichte >1,0 g/cm$^3$ ≤5%; Fixiertemperatur = Temperatur der Verbundfolie während des Relaxierens

| Verstreckungsfaktor (TDxMD) | Relaxationsfaktor (TDxMD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweil zeit | Schrumpf nach Verstrecken und Relaxieren (TDxMD) (%) |
|---|---|---|---|---|---|---|---|---|
| 5,0 × 5,0 | 5 × 1 | ↓ | 4,75 × 4,95 | 70 | → | 5 | → | kein stabiler Prozess |
| 5,0 × 5,0 | 40 × 20 | ↑ | 3,0 × 4,0 | 70 | → | 5 | → | 9 × 11 |
| 5,0 × 5,0 | 20 × 5 | → | 4,0 × 4,75 | 60 | ↓ | 5 | → | 31 × 34 |
| 5,0 × 5,0 | 20 × 5 | → | 4,0 × 4,75 | 80 | ↑ | 5 | → | kein stabiler Prozess |

**Folie 5:** PP/HV/EVOH(5%)/HV/PE; %-Angaben in Massenprozent der Gesamtmasse der Verbundfolie; Materialanteil mit einer Dichte >1,0 g/cm$^3$ ≤5%; Fixiertemperatur = Temperatur der Verbundfolie während des Relaxierens

| Verstreckungsfaktor (TDxMD) | Relaxationsfaktor (TDxMD) (%) | Höhe der Relaxion | Restverstreckungsfaktor (TDxMD) | Fixiertemperatur (°C) | Höhe der Fixiertemp. | Verweilzeit während Relaxieren (sec) | Länge der Verweil zeit | Schrumpf nach Verstrecken und Relaxieren (TDxMD) (%) |
|---|---|---|---|---|---|---|---|---|
| 5,0 × 5,0 | 20 × 5 | → | 4,0 × 4,75 | 70 | → | 2 | ↓ | 28 × 29 |
| 5,0 × 5,0 | 20 × 5 | → | 4,0 × 4,75 | 70 | → | 9 | ↑ | kein stabiler Prozess |
| 5,0 × 5,0 | 5 × 1 | ↓ | 4,75 × 4,95 | 60 | ↓ | 2 | ↓ | 37 × 39 |
| 5,0 × 5,0 | 20 × 5 | → | 4,0 × 4,75 | 70 | → | 5 | → | 23 × 24 |
| 5,0 × 5,0 | 40 × 20 | ↑ | 3,0 × 4,0 | 80 | ↑ | 9 | ↑ | kein stabiler Prozess |

EP 3 962 738 B1

Zur Lösung der definierten Aufgabe sind somit neben dem idealerweise zur Anwendung kommende Schichtaufbau mit den darin bevorzugt enthaltenen Rohstoffen in Kombination mit den in den einzelnen Prozessschritten anliegenden Temperaturen, Prozessfaktoren und hierbei im Einzelnen der Verstreckungsfaktor, der Relaxationsfaktor und der Restverstreckungsfaktor, sowie die Verweilzeit, zumindest die Dauer der thermischen Fixierung (Relaxion), von entscheidender Bedeutung. Durch die erfindungsgemäße Kombination der vorstehend genannten bzw. in den nebengeordneten Ansprüchen definierten Merkmalen und Parameter wurde erstmals das Ziel erreicht, eine gattungsgemäße Verbundfolie mittels Coextrusion und ohne Laminierung herzustellen und insbesondere stabil herzustellen, welche neben den anzustrebenden Eigenschaften, wie beispielsweise Wärmebeständigkeit, Bedruckbarkeit und Sauerstoffbarriere, auch keinen Schrumpf oder einen Schrumpf von weniger als 5 %, vorzugsweise weniger als 3 %, jeweils in der MD und TD, aufweist.

Erfindungsgemäß weist das thermoplastisches Harz, welches in der Schicht (c) enthalten ist oder aus welchem die Schicht (c) besteht, eine Schmelzetemperatur von weniger als 120 °C auf. Durch den vergrößerten Temperaturunterschied zur Schmelzetemperatur der Außenschicht wird erzielt, dass die Verbundfolie früher, d.h., bereits bei einer geringeren Temperatur, gesiegelt werden kann. Zudem lassen sich höhere Taktzahlen bei der Weiterverarbeitung der Verbundfolie erzielen.

Erfindungsgemäß weist das thermoplastisches Harz, welches in der Schicht (a) enthalten ist oder aus welchem die Schicht (a) besteht, eine Schmelzetemperatur von mehr als 170 °C auf. Durch die höhere Temperatur der Außenschicht kann in der Weiterverarbeitung mit höheren Temperaturen gearbeitet und somit können bei der Weiterverarbeitung der Verbundfolie höhere Taktzahlen erzielt werden.

Ferner kann erfindungsgemäß die Schicht (a), also die Außenschicht, oder das thermoplastische Harz der Schicht (a) vorteilhaft eine vorbestimmte Polarität aufweisen, welche in Gestalt der Oberflächenspannung, angegeben in der Einheit Dyn/cm, dargestellt wird. Dieser Wert kann vorzugsweise > 40 Dyn/cm, insbesondere > 42 Dyn/cm betragen, um eine möglichst optimale Bedruckbarkeit zu ermöglichen.

Erfindungsgemäß kann ferner in einer vorteilhaften Ausführungsform vorgesehen sein, dass die Außenschicht (a) aus EVOH besteht oder diese enthält.

Bislang ist aus dem Stand der Technik auch keine gattungsgemäße Verbundfolie bekannt, bei der EVOH als Schichtbestandteil in der Außenschicht (a) eingesetzt wurde, oder bei der die Schicht (a) aus EVOH bestehen würde. So ist aus dem Stand der Technik der Einsatz von EVOH als ein Material mit einer hervorragenden Sauerstoff-Barriere bekannt. Ein Einsatz zu diesem Zweck setzt jedoch eine Innenlage des EVOH voraus, da EVOH durch eindringende Feuchtigkeit schnell seine guten Sauerstoffbarriere-Eigenschaften verliert. Daher wurde EVOH als Schichtbestandteil oder Schichtmaterial immer nur beidseitig umgeben von Schutzschichten, wie beispielsweise Polyolefin oder Polyamid, verwendet, welche zum Teil eine hohe Wasserdampfbarriere aufweisen. Der Einsatz von EVOH in gattungsgemäßen Verbundfolien zu einem anderen Zweck und auf eine andere Weise bzw. in einer anderen Anordnung, beispielsweise als Außen- oder Siegelschicht (Innenschicht; Oberfläche zum zu verpackenden Gut), ist jedoch bislang nicht bekannt.

Dagegen ist erfindungsgemäß die Möglichkeit vorgesehen, EVOH bewusst in der Schicht (a), also in der eine Oberfläche der Verbundfolie nach außen darstellende Außenschicht, einzusetzen. Dabei kann die Außenschicht (a) EVOH enthalten oder daraus bestehen. Beim Vorsehen von EVOH in der Außenschicht (a) spielt jedoch nicht die Eigenschaft des EVOH als Sauerstoffbarriere eine Rolle. Vielmehr kommt es erfindungsgemäß darauf an, dass sich durch den Einsatz von EVOH in der Außenschicht die Recyclebarkeit der Folie wesentlich erhöht wird im Vergleich zu Verbundfolien, welche Außenschichten mit PA oder PET aufweisen. Dies liegt daran, dass das EVOH eine geringere Schmelztemperatur im Vergleich zu den bisher in der Außenschicht vorgesehenen Materialien PA und PET aufweist, sodass sich der Unterschied der Schmelztemperaturen der Außenschicht und der Siegelschicht (Innenschicht) verringert. Dabei kann die zum Recycling erforderliche Temperatur zum Aufschmelzen insgesamt verringert werden, wodurch sich die Recyclebarkeit der Verbundfolie verbessert.

Darüber hinaus haben die Erfinder festgestellt, dass sich durch das EVOH in der Außenschicht die mechanischen Eigenschaften, wie beispielsweise Steifigkeit und Bedruckbarkeit, der Folie ähnlich wie PET oder PA gegenüber Polyolefinen, wie beispielsweise PE oder PP, weiter verbessern lassen. So führt die gegenüber diesen Polyolefinen erhöhte Schmelzetemperatur des EVOH und damit verbunden die größere Temperaturbeständigkeit zur Innenschicht (Siegelschicht) zu einer insgesamt besseren Weiterverarbeitbarkeit der Verbundfolie (Taktzahlen).

Die Erfindung wird durch die Gegenstände der unabhängigen Ansprüche definiert. Vorteilhafte Ausführungsformen der vorliegenden Erfindung sind Gegenstand der abhängigen Ansprüche.

Ergänzende Offenbarung (Definitionen etc.):

Das hierin beschriebene, erfindungsgemäße Verfahren zur Herstellung einer mehrschichtigen Verbundfolie kann dadurch gekennzeichnet sein, dass es keinen Schritt das Laminierens, d.h., des Verklebens, von Schichten oder Schichtenverbunden aufweist.

Entsprechend kann die hierin beschriebene, erfindungsgemäße, mehrschichtige Verbundfolie eine nicht-laminimierte Verbundfolie sein.

Längendefinitionen (jeweils bezogen auf die Maschinenrichtung oder die Querrichtung):

L0 :=    Länge eines vorbestimmten Abschnitts der Verbundfolie vor dem Verstrecken;

L1:=    Länge desselben Abschnitts der Verbundfolie nach dem Verstrecken und vor dem Relaxieren;

L2 :=    Länge desselben Abschnitts der Verbundfolie nach dem Verstrecken und vor dem Relaxieren;

L3 :=    Länge desselben Abschnitts der Verbundfolie nach dem Verstrecken und nach dem Relaxieren;

Definition des Verstreckungsfaktors: Verstreckungsfaktor V = Länge L1 eines vorbestimmten Abschnitts der Verbundfolie nach dem Verstrecken und vor dem Relaxieren dividiert durch die Länge L0 desselben Abschnitts der Verbundfolie vor dem Verstrecken; (V = L1/L0)

Definition des Relaxationsfaktors: Relaxationsfaktor RL = Betrag der Differenz aus (der Länge L3 eines vorbestimmten Abschnitts der Verbundfolie nach dem Verstrecken und nach dem Relaxieren und der Länge L2 desselben Abschnitts der Verbundfolie nach dem Verstrecken und vor dem Relaxieren) dividiert durch die Länge L2 desselben Abschnitts der Verbundfolie nach dem Verstrecken und vor dem Relaxieren; (RL = |(L3-L2)|/L2)

Definition des Restverstreckungsfaktors; Restverstreckungsfaktor RV = Länge L3 eines vorbestimmten Abschnitts der Verbundfolie nach dem Verstrecken und nach dem Relaxieren dividiert durch die Länge L0 desselben Abschnitts der Verbundfolie vor dem Verstrecken und vor der Relaxieren; (RV = L3/L0))

Vorzugsweise ist die erfindungsgemäße Verbundfolie eine mehrschichtige Verbundfolie mit Barrierefunktion oder eine mehrschichtige Barrierefolie, wobei sich die Barriereeigenschaft auf eine verminderte Sauerstoffdurchlässigkeit oder eine verminderte Wasserdampfdurchlässigkeit oder beides bezieht.

Schrumpf (oder Heißschrumpf): gemessen in Wasser bei 90 °C, vorzugsweise innerhalb von 1 Sekunde nach dem Eintauchen, zumindest aber innerhalb von 10 Sekunden nach dem Eintauchen.

Erfindungsgemäß wird die Probe zur Bestimmung des Schrumpfs (oder Heißschrumpfs) für eine vorbestimmte, insbesondere die vorgenannte Zeitdauer, in Wasser bei 90 °C getaucht und nach dem Herausnehmen sofort mit Wasser auf Raumtemperatur abgekühlt. Die Länge eines vormarkierten Abschnitts nach dieser Behandlung wird gemessen und auf die gemessene Länge desselben Abschnitts der Probe vor der Behandlung bezogen. Das resultierende Längenverhältnis ("geschrumpft" zu "nicht geschrumpft"), angegeben in Prozent, definiert den Schrumpf. Je nach Richtung der Längenmessung ergeben sich der Schrumpf in der longitudinalen (MD) und in der transversalen Richtung (TD). Der Gesamtschrumpf wird durch Addition des Schrumpfs in der longitudinalen und in der transversalen Richtung errechnet. Mehrfachbestimmungen, wie Dreifach- oder Fünfachbestimmungen, der Längenmessungen, und die Bildung der entsprechenden Mittelwerte hieraus, erhöhen Vorteilhaft die Genauigkeit der Bestimmung. Erfindungsgemäß können der Schrumpf und der Gesamtschrumpf insbesondere gemäß ASTM 2732 bestimmt werden.

Die Messung der Sauerstoffdurchlässigkeit erfolgt im Rahmen der Erfindung bei 23 °C und 75 % relativer Luftfeuchtigkeit (ASTMD 1434).

Das erfindungsgemäße Verfahren und die erfindungsgemäße Verbundfolie können vorzugsweise mit dem sog. Double-Bubble- und insbesondere mit dem Tripple-Bubble-Verfahren, für welches die Anmelderin geeignete Anlagen zur Verfügung stellt, durchgeführt bzw. hergestellt werden, welche dem Fachmann bekannt sind. Dabei kann die mehrschichte Verbundfolie beispielsweise mittels eines für die Herstellung von Verbundfolien mit drei oder mehr Schichten eingerichteten Düsenblaskopfes der Anmelderin, vorzugsweise mit thermischer Trennung der Einzelschichten, aus den jeweiligen Harzschmelzen coextrudiert, mit einer Wasserkühlung der Anmelderin abgekühlt, wiedererwärmt, mittels einer eingeschlossenen Druckluftblase biaxial (in der Maschinenrichtung (MD) und in der Querrichtung (TD)) verstreckt und schließlich in einem weiteren Schritt in einem definierten Temperaturregime relaxiert (= thermofixiert) werden. Die erfindungsgemäße Verbundfolie kann eine Verbundfolie sein, welche eine Barriere gegen Gasdiffusion, insbesondere Sauerstoffdiffusion, und/oder gegen Wasserdampfdiffusion aufweist. Ein derartiges Herstellungsverfahren ist dem Fachmann auch aus dem Lehrbuch von Savic, Z., Savic, I., "Sausage Casings", 1. Auflage, 2002, VICTUS Lebensmittelindustriebedarf Vertriebsgesellshaft m.b.H., Wien, Österreich, Kapitel 7, insb. Unterkapitel 4.2, Seiten 267 bis 270, bekannt.

Eine weitere Möglichkeit, die erfindungsgemäße Folie herzustellen, ist das Verstrecken einer co-extrudierten Flachfolie nach dem dem Fachmann bekannten Tenter-Frame-Verfahren.

Die Verbundfolie der vorliegenden Erfindung lässt sich vorteilhaft auf einer Vorrichtung bzw. Anlage derselben Anmelderin zur Herstellung von schlauchförmigen Nahrungsmittelfolien für Lebensmittelverpackungen, wie beispielsweise Schrumpffolien oder Schrumpfbeutel, im Düsenblasverfahren erzielen, wenn man dabei zusätzlich die in der Patentschrift DE 199 16 428 B4 derselben Anmelderin offenbarte Einrichtung zum raschen Abkühlen dünner thermoplastischer Schläuche nach deren Extrusion einsetzt. Hierzu kann auch eine entsprechende Weiterentwicklung gemäß Patentschrift DE 100 48 178 B4 berücksichtigt werden.

Dabei wird die im Düsenblaskopf aus der Kunststoffschmelze erzeugte, schlauchförmige Folie einer intensiven Kühlung unterworfen, bei der die amorphe Struktur der Thermoplaste aus der Kunststoffschmelze erhalten bleibt. Die im Düsenblaskopf aus der Kunststoffschmelze vertikal extrudierte, schlauchförmige Folie wandert zunächst ohne Wandberührung zur Abkühlung in die Kühlvorrichtung, wie dies im Detail in den Druckschriften DE 199 16 428 B4 und DE 100 48 178 B4 beschrieben ist. Hinsichtlich Einzelheiten der Verfahrensweisen, des Aufbaus und der Funktionsweise dieser auch als Kalibriereinrichtung bezeichneten Kühleinrichtung wird zur Vermeidung von Wiederholungen auf den Inhalt der Druckschriften DE 199 16 428 B4 und DE 100 48 178 B4 vollinhaltlich Bezug genommen.

Die schlauchförmige Folie durchläuft danach in der Kühleinrichtung Abstützungen, gegen die sich die Folie infolge eines Differenzdrucks zwischen dem Inneren der schlauchförmigen Folie und dem Kühlmittel abstützt, wobei ein Flüssigkeitsfilm zwischen Folie und Abstützungen erhalten bleibt, so dass ein Ankleben der schlauchförmigen Folie ausgeschlossen ist. Der Durchmesser der Abstützungen nimmt dabei Einfluss auf den Durchmesser der schlauchförmigen Folie, weshalb diese Kühleinrichtung derselben Anmelderin auch als Kalibriereinrichtung bezeichnet wird.

Erfindungsgemäß kann Polyamid (PA) ein Stoff sein, ausgewählt aus einer Gruppe, bestehend aus PA aus ε-Caprolactam bzw. Poly(ε-caprolactam) (PA6), PA aus Hexamethylendiamin und Adipinsäure bzw. Polyhexamethylenadipinamid (PA6.6), PA aus ε-Caprolactam und Hexamethylendiamin/Adipinsäure (PA6.66), PA aus Hexamethylendiamin und Dodecandisäure bzw. Polyhexamethylendodecanamid (PA6.12), PA aus 11-Aminoundecansäure bzw. Polyundecanamid (PA11), PA aus 12-Laurinlactam bzw. Poly(ω-laurinlactam) (PA12), oder ein Gemisch aus diesen PA oder ein Gemisch aus diesen PA mit amorphem PA oder mit anderen Polymeren. Die allgemeine Schreibweise PAx.y steht synonym für PAx/y oder PAxy.

Im Sinne dieser Anmeldung kann Polyolefin (PO) ein Stoff, ausgewählt aus einer Gruppe, bestehend aus PP, PE, LDPE, LLDPE, Polyolefin-Plastomer (POP), Ethylen-VinylacetatCopolymere (EVA), Ethylen-Methylmethacrylat-Copolymere (EMMA), Ethylen-Methacrylsäure-Copolymere (EMA), Ethylen-Acrylsäure-Copolymere (EAA), Copolymere aus Cycloolefinen/Cycloalkenen und 1-Alkenen bzw. Cycloolefin-Copolymere (COC), Ionomere (IO) oder ein Gemisch bzw. eine Mischung derselben sein. Ferner umfasst PO im Sinne der vorliegenden Erfindung auch eine Mischung der vorstehenden PO mit Ionomeren und/oder mit Haftvermittlern sein.

Im Rahmen der vorliegenden Erfindung kann Polyester als Schichtbestandteil für die Schicht (a) eingesetzt werden. Polyester sind Polymere mit Esterfunktionen in ihrer Hauptkette und können insbesondere aliphatische oder aromatische Polyester sein. Polyester können durch Polykondensation entsprechender Dicarbonsäuren mit Diolen erhalten werden. Jede Dicarbonsäure, die zur Ausbildung eines Polyesters geeignet ist, kann zur Synthese des Polyesters verwendet werden, insbesondere Terephthalsäure und Isophthalsäure, ebenso wie Dimere ungesättigter aliphatischer Säuren. Als die weitere Komponente für die Synthese des Polyesters können Diole eingesetzt werden, wie beispielsweise: Polyalkylenglycole, wie Ethylenglycol, Propylenglycol, Tetramethylenglycol, Neopentylglycol, Hexamethylenglycol, Diethylenglycol, Polyethylenglycol und Polytetramethylenoxidglycol; 1,4-Cyclohexandimethanol, und 2-Alkyl-1,3-propandiol.

Besonders bevorzugt ist PET, das für den Polyester Polyethylenterephthalat steht. PET kann durch Polykondensation von Terephthalsäure (1,4-Benzoldicarbonsäure) und Ethylenglycol (1,2-Dihydroxyethan) erhalten werden.

Ein weiterer bevorzugter Polyester sind die Polylactide oder Polymilchsäuren (PLA), welche in den Schichten, für die ein Polyester als ein Schichtbestandteil vorgesehen ist, als Schichtbestandteil enthalten sein können. Diese Polymere sind biokompatibel/biologisch abbaubar und weisen neben einer geringen Feuchtigkeitsaufnahme hohe Schmelzetemperaturen bzw. hohe Schmelzpunkte und eine gute Zugfestigkeit auf.

Im Rahmen der vorliegenden Erfindung steht EVOH gleichsam für EVOH als auch für eine Mischung von EVOH mit anderen Polymeren, Ionomeren, EMA oder EMMA. Insbesondere umfasst EVOH auch eine Mischung aus EVOH und PA oder aus EVOH und Ionomer.

Haftvermittler (HV) können bei der erfindungsgemäßen Verbundfolie als Zwischenschichten vorgesehen sein und stehen für Klebeschichten, die für eine gute Verbundhaftung der einzelnen Schichten untereinander sorgen. Dabei kann HV auf einem Grundstoff, ausgewählt aus einer Gruppe, bestehend aus PE, PP, EVA, EMA, EMMA, EAA und einem Ionomer, oder einem Gemisch derselben basieren. Besonders geeignet als Haftvermittler (HV) sind erfindungsgemäß EVA, EMA oder EMMA, jeweils mit einer Reinheit von > 99 %, vorzugsweise > 99,9 %.

Gemäß einer weiteren, bevorzugten Ausführungsform können Schichten, die HV als Schichtbestandteil aufweisen, auch ein Gemisch aus PO und HV oder ein Gemisch aus EVA, EMA, EMMA und/oder EAA und HV oder ein Gemisch aus Ionomer und HV oder ein Gemisch einer Mehrzahl von HV aufweisen.

Im Sinne dieser Erfindung wird der Schmelzepunkt eines Polymers mittels dynamischer Differenzkalorimetrie bzw. Differenz-Thermoanalyse gemäß DIN 51007:2019-04 bzw. DIN EN ISO 11357-1:2017-02 bestimmt. Alternativ ist aus dem Stand der Technik auch die Methode ASTM D3418 bekannt.

Im Sinne dieser Erfindung wird der Erweichungspunkt eines Polymers nach dem Verfahren zur Bestimmung der Vicat-Erweichungstemperatur (VST = Vicat softening temperature) nach DIN EN ISO 306:2014-03 bestimmt.

Im Sinne dieser Erfindung wird die Bedruckbarkeit gemäß DIN 16500-2:2018-09 gemessen.

Im Sinne dieser Erfindung meint die Bezeichnung eines Materials als "Schichtbestandteil", dass eine Schicht der erfindungsgemäßen Verbundfolie wenigstens teilweise dieses Material aufweist. Dabei kann die Bezeichnung "Schichtbestandteil" im Sinne dieser Erfindung insbesondere einschließen, dass die Schicht vollständig bzw. ausschließlich aus diesem Material besteht.

Im Sinne dieser Erfindung bedeutet "mittlere" oder "zwischenliegende" Schicht eine Schicht der Verbundfolie, welche zwischen der Schicht (a) und der Schicht (c) angeordnet ist. Erfindungsgemäß ist die Schicht (a) die Schicht, welche eine Oberfläche der Verbundfolie nach außen ausbildet (Außenschicht). Erfindungsgemäß ist die Schicht (c) die Schicht, welche eine einem zu verpackenden Gut zugewandte oder mit diesen in Berührung kommende Oberfläche der Verbundfolie ausbildet (Innenschicht). Definitionsgemäß können die Schichten (a) und (c) der erfindungsgemäßen Verbundfolie keine "mittlere" oder "zwischenliegende" Schicht sein.

Die erfindungsgemäße Verbundfolie ist vorzugsweise flächen- oder schlauchförmig. Vorzugsweise ist die Verbundfolie eine Nahrungsmittelfolie oder Nahrungsmittelhülle. Die Verbundfolie ist darüber hinaus vorzugsweise zur Verwendung als nicht-heißschrumpfbares Verpackungsmaterial geeignet.

Beispiele für erfindungsgemäße coextrudierte und biaxial verstreckte Mehrschichtfolien mit Barrierefunktion mit wenigstens drei Schichten (a), (b) und (c)

3-Schicht-Strukturen

| (a) | (b) | (c) |
|-----|------|-----|
| PA  | EVOH | PO  |

Beispiele für erfindungsgemäße coextrudierte und biaxial verstreckte Mehrschichtfolien mit Barrierefunktion mit wenigstens vier Schichten (a), (b), (d) und (c)

4-Schicht-Strukturen

| (a) | (d) | (b) | (c) |
|-----|-----|------|-----|
| PET | PO  | EVOH | PO  |
| PA  | PO  | EVOH | PO  |

| (a) | (d) | (b) | (c) |
|-----|-----|------|-----|
| PET | PO  | PVDC | PO  |
| PA  | PO  | PVDC | PO  |

| (a) | (d) | (b) | (c) |
|-----|-----|-----|-----|
| PET | PO  | PA  | PO  |
| PA  | PO  | PA  | PO  |

5-Schicht-Strukturen

| (a) | (d1) | (b)  | (d2) | (c) |
|-----|------|------|------|-----|
| PET | PO   | EVOH | HV   | PO  |
| PA  | PO   | EVOH | HV   | PO  |

| (a) | (d1) | (b)  | (d2) | (c) |
|-----|------|------|------|-----|
| PET | PO   | PVDC | HV   | PO  |

(fortgesetzt)

| (a) | (d1) | (b) | (d2) | (c) |
|---|---|---|---|---|
| PA | PO | PVDC | HV | PO |

| (a) | (d1) | (b) | (d2) | (c) |
|---|---|---|---|---|
| PET | PO | PA | HV | PO |
| PA | PO | PA | HV | PO |

7-Schicht-Strukturen

| (a) | (d1) | (d2) | (d3) | (b) | (d4) | (c) |
|---|---|---|---|---|---|---|
| PET | HV | PO | HV | EVOH | HV | PO |
| PA | HV | PO | HV | EVOH | HV | PO |

| (a) | (d1) | (d2) | (d3) | (b) | (d4) | (c) |
|---|---|---|---|---|---|---|
| PET | HV | PO | HV | PVDC | HV | PO |
| PA | HV | PO | HV | PVDC | HV | PO |

| (a) | (d1) | (d2) | (d3) | (b) | (d4) | (c) |
|---|---|---|---|---|---|---|
| PET | HV | PO | HV | PA | HV | PO |
| PA | HV | PO | HV | PA | HV | PO |

9-Schicht- Strukturen

| (a) | (d1) | (d2) | (d3) | (b1) | (b2) | (b3) | (d4) | (c) |
|---|---|---|---|---|---|---|---|---|
| PET | HV | PO | HV | PA | EVOH | PA | HV | PO |
| PA | HV | PO | HV | PA | EVOH | PA | HV | PO |

**Patentansprüche**

1. Verfahren zur Herstellung einer mehrschichtigen Verbundfolie, wobei das Verfahren wenigstens die nachfolgenden Schritte umfasst:

einen Schritt des Co-Extrudierens von wenigstens drei Schichten (a), (b) und (c), von denen

- die Schicht (a) eine Oberfläche der Verbundfolie nach außen ausbildet;
- die Schicht (c) eine einem zu verpackenden Gut zugewandte oder mit diesem in Berührung kommende Oberfläche der Verbundfolie ausbildet; und
- die Schicht (b) zwischen der Schicht (a) und der Schicht (c) angeordnet ist;
- wobei die Schicht (b) aus einer einzigen Schicht oder einer Mehrzahl von Schichten (b1, b2, b3, b4, ...),

vorzugsweise zwei, drei oder vier Schichten, besteht;

einen Schritt des Verstreckens der co-extrudierten Verbundfolie; und
einen Schritt des Relaxierens der verstreckten Verbundfolie;
wobei das Verstrecken bi-axial erfolgt;
wobei ein Verstreckungsfaktor in der Maschinenrichtung bzw. Längsrichtung (MD) wenigstens 2,0 beträgt;
wobei ein Verstreckungsfaktor in der Querrichtung bzw. Transversalrichtung (TD) wenigstens 2,0 beträgt;
wobei die Summe aus dem Verstreckungsfaktor in der Maschinenrichtung (MD) und dem Verstreckungsfaktor in der Querrichtung (TD) wenigstens 5,0 beträgt;
wobei die Verbundfolie während des Verstreckens eine Temperatur von 70 bis 130 °C aufweist;
wobei ein Relaxationsfaktor in der Maschinenrichtung (MD) mehr als 0,00 beträgt;
wobei ein Relaxationsfaktor in der Querrichtung (TD) mehr als 0,00 beträgt;
wobei die Summe aus dem Relaxationsfaktor in der Maschinenrichtung (MD) und dem Relaxationsfaktor in der Querrichtung (TD) wenigstens 0,05 (= 5 %), vorzugsweise wenigstens 0,1 (= 10 %), vorzugsweise wenigstens 0,2 (= 20 %), insbesondere wenigstens 0,4 (= 40 %), beträgt;
wobei die Verbundfolie während des Relaxierens eine Temperatur von 60 bis 180 °C, vorzugsweise 60 bis 150 °C, besonders bevorzugt 60 bis 120 °C, besonders bevorzugt 80 bis 100 °C, aufweist;
wobei eine Verweilzeit während des Relaxierens, vorzugsweise während des Relaxierens unter Temperatur, wenigstens 2 Sekunden und höchstens 30 Sekunden beträgt, oder die Dauer des Relaxierens wenigstens 2 Sekunden und höchstens 30 Sekunden beträgt;
wobei ein Restverstreckungsfaktor in der Maschinenrichtung (MD) höchstens 5,0 beträgt;
wobei ein Restverstreckungsfaktor in der Querrichtung (TD) höchstens 5,0 beträgt;
wobei die Schicht (a) aus einem thermoplastischen Harz mit einer Dichte von mehr als 1,00 g/cm$^3$ und einer Schmelztemperatur von mehr als 170 °C, gemessen gemäß DIN 51007:2019-04, besteht;
wobei die Schicht (b) oder die Mehrzahl von Schichten (b1, b2, ...) jeweils ein thermoplastisches Harz mit einer Dichte von mehr als 1,00 g/cm$^3$ enthält oder daraus besteht;
wobei der Massenanteil der thermoplastischen Harze mit einer Dichte von mehr als 1,00 g/cm$^3$ 1 bis < 20 %, bezogen auf die Gesamtmasse der Verbundfolie, beträgt; und
wobei die Schicht (c) ein thermoplastisches Harz mit einer Dichte von weniger als 0,95 g/cm$^3$ und einer Schmelztemperatur von weniger als 120 °C, gemessen gemäß DIN 51007:2019-04, enthält oder daraus besteht.

2. Verfahren nach Anspruch 1, **dadurch gekennzeichnet, dass** das Verfahren den nachfolgenden Schritt umfasst:

einen Schritt des Co-Extrudierens von wenigstens vier Schichten (a), (b), (d) und (c), wobei

- die Schicht (d) zwischen der Schicht (a) und der Schicht (c), vorzugsweise zwischen der Schicht (a) und der Schicht (b), angeordnet ist;
- wobei die Schicht (d) aus einer einzigen Schicht oder einer Mehrzahl von Schichten (d1, d2, ...), vorzugsweise zwei, drei oder vier Schichten, besteht; und

wobei die Schicht (d) oder die Mehrzahl von Schichten (d1, d2, ...) jeweils ein thermoplastisches Harz, vorzugsweise ein Polyolefin, mit einer Dichte von weniger als 1,00 g/cm$^3$, vorzugsweise weniger als 0,98 g/cm$^3$, enthält oder daraus besteht.

3. Verfahren nach Anspruch 1 oder 2, **dadurch gekennzeichnet, dass**

das thermoplastische Harz der Schicht (a) und das thermoplastische Harz der Schicht (b) unterschiedlich sind; oder
das thermoplastische Harz der Schicht (a) sich von dem thermoplastischen Harz der Schicht (b) oder allen thermoplastischen Harzen der Schichten (b1, b2, ...) unterscheidet; oder
das thermoplastische Harz der Schicht (a) und das thermoplastische Harz der Schicht (b) identisch sind; oder
das thermoplastische Harz der Schicht (a) mit wenigstens einem der thermoplastischen Harze der Schichten (b1, b2, ...) identisch ist.

4. Verfahren nach einem der Ansprüche 1 bis 3, **dadurch gekennzeichnet, dass**

das thermoplastische Harz der Schicht (c) ein Polyolefin mit einer Siegeltemperatur ist, welche kleiner als die Siegeltemperatur des thermoplastischen Harzes der Schicht (a) ist; und/oder

das thermoplastische Harz der Schicht (b) eine Sauerstoffdurchlässigkeit von weniger als 100 cm$^3$/m$^2$ d·bar aufweist, gemessen bei 23 °C und 75 % relativer Luftfeuchtigkeit nach ASTMD 1434, oder die thermoplastischen Harze der Schichten (b1, b2, ...) jeweils oder in Summe eine Sauerstoffdurchlässigkeit von weniger als 100 cm$^3$/m$^2$ ·d·bar aufweisen, gemessen bei 23 °C und 75 % relativer Luftfeuchtigkeit nach ASTMD 1434; und/oder die Schicht (b) eine Sauerstoffdurchlässigkeit von weniger als 100 cm$^3$/m$^2$ d·bar aufweist, gemessen bei 23 °C und 75 % relativer Luftfeuchtigkeit nach ASTMD 1434, oder die Schichten (b1, b2, ...) jeweils oder in Summe eine Sauerstoffdurchlässigkeit von weniger als 100 cm$^3$/m$^2$ ·d·bar aufweisen, gemessen bei 23 °C und 75 % relativer Luftfeuchtigkeit nach ASTMD 1434; und/oder das Verstrecken simultan oder mehrstufig nacheinander erfolgt; und/oder

die Verbundfolie nach dem Verstrecken und Relaxieren einen Schrumpf von weniger als 0,05 (= 5 %), vorzugsweise weniger als 0,03 (= 3 %), in der Maschinenrichtung (MD) aufweist, wobei der Schrumpf gemäß ASTM 2732 gemessen wird; und/oder

die Verbundfolie nach dem Verstrecken und Relaxieren einen Schrumpf von weniger als 0,05 (= 5 %), vorzugsweise weniger als 0,03 (= 3 %), in der Querrichtung (TD) aufweist, wobei der Schrumpf gemäß ASTM 2732 gemessen wird; und/oder

vorzugsweise die Verbundfolie nach dem Verstrecken und Relaxieren eine Summe aus dem Schrumpf in der Maschinenrichtung (MD) und dem Schrumpf in der Querrichtung (TD) (= Gesamtschrumpf) von weniger als 0,05 (= 5 %), aufweist, wobei der Schrumpf gemäß ASTM 2732 gemessen wird.

5. Verfahren nach einem der Ansprüche 1 bis 4, **dadurch gekennzeichnet, dass**

die Dicke der Schicht (a) 20 %, vorzugsweise 10 %, der Dicke der gesamten Verbundfolie nicht überschreitet; und/oder

die Dicke der Schicht (b) oder die Gesamtdicke der Schichten (b1, b2, ...) 20 %, vorzugsweise 10 %, der Dicke der gesamten Verbundfolie nicht überschreitet; und/oder

der Massenanteil der Schicht (a) bezogen auf die Gesamtmasse der Verbundfolie 10 % nicht überschreitet; und/oder

der Massenanteil der Schicht (b) oder die Summe der Massenanteile der Schichten (b1, b2, ...) bezogen auf die Gesamtmasse der Verbundfolie 10 % nicht überschreitet; und/oder

die Summe der Massenanteile der Schichten (a) und (b) oder der Schichten (a) und (b1, b2, ...) bezogen auf die Gesamtmasse der Verbundfolie 10 % nicht überschreitet.

6. Verfahren nach einem der Ansprüche 1 bis 5, **dadurch gekennzeichnet, dass** das thermoplastische Harz der Schicht (a) ein Polyester, vorzugsweise ein Polyethylenterephthalat (PET) oder eine Polymilchsäure bzw. ein Polylactid (PLA), ein Polyamid (PA), ein Ethylen-Vinylalkohol-Copolymer (EVOH), oder eine beliebige Mischung derselben enthält oder daraus besteht;

wobei Ethylen-Vinylalkohol-Copolymer (EVOH) gleichsam für Ethylen-Vinylalkohol-Copolymer, als auch für eine Mischung von Ethylen-Vinylalkohol-Copolymer mit anderen Polymeren, Ionomeren, EMA oder EMMA, vorzugsweise für eine Mischung aus EVOH und PA oder aus EVOH und Ionomer, steht; und/oder das thermoplastische Harz der Schicht (c) ein Polyolefin (PO), vorzugsweise ein Polyethylen (PE) und/oder ein Polypropylen (PP), ein Ethylen-Vinylacetat-Copolymer (EVA), ein Ionomer (IO), ein Ethylen-Methylmethacrylat-Copolymer (EMMA), ein Ethylen-Methacrylsäure-Copolymer (EMA), oder eine beliebige Mischung derselben enthält oder daraus besteht.

7. Mehrschichtige, coextrudierte, bi-axial verstreckte und relaxierte Verbundfolie, vorzugsweise hergestellt nach dem Verfahren nach einem der Ansprüche 1 bis 6, aufweisend wenigstens drei Schichten (a), (b) und (c), von denen

- die Schicht (a) eine Oberfläche der Verbundfolie nach außen ausbildet;
- die Schicht (c) eine einem zu verpackenden Gut zugewandte oder mit diesem in Berührung kommende Oberfläche der Verbundfolie ausbildet; und
- die Schicht (b) zwischen der Schicht (a) und der Schicht (c) angeordnet ist;
- wobei die Schicht (b) aus einer einzigen Schicht oder einer Mehrzahl von Schichten (b1, b2, b3, b4, ...), vorzugsweise zwei, drei oder vier Schichten, besteht;
wobei ein Restverstreckungsfaktor der Verbundfolie in der Maschinenrichtung (MD) höchstens 5,0 beträgt;
wobei ein Restverstreckungsfaktor der Verbundfolie in der Querrichtung (TD) höchstens 5,0 beträgt;
wobei die Schicht (a) aus einem thermoplastischen Harz mit einer Dichte von mehr als 1,00 g/cm$^3$ und einer Schmelztemperatur von mehr als 170 °C, gemessen gemäß DIN 51007:2019-04, besteht;
wobei die Schicht (b) oder die Mehrzahl von Schichten (b1, b2, ...) jeweils ein thermoplastisches Harz mit einer Dichte von mehr als 1,00 g/cm$^3$ enthält oder daraus besteht;

wobei der Massenanteil der thermoplastischen Harze mit einer Dichte von mehr als 1,00 g/cm$^3$ 1 bis < 20 %, bezogen auf die Gesamtmasse der Verbundfolie, beträgt; wobei die Schicht (c) ein thermoplastisches Harz mit einer Dichte von weniger als 0,95 g/cm$^3$ und einer Schmelztemperatur von weniger als 120 °C, gemessen gemäß DIN 51007:2019-04, enthält oder daraus besteht; und

die Verbundfolie eine Summe aus dem Schrumpf in der Maschinenrichtung (MD) und dem Schrumpf in der Querrichtung (TD) von weniger als 0,05 aufweist, wobei der Schrumpf gemäß ASTM 2732 gemessen wird.

8. Verbundfolie nach Anspruch 7, aufweisend wenigstens vier Schichten (a), (b), (d) und (c), wobei

- die Schicht (d) zwischen der Schicht (a) und der Schicht (c), vorzugsweise zwischen der Schicht (a) und der Schicht (b), angeordnet ist;
- wobei die Schicht (d) aus einer einzigen Schicht oder einer Mehrzahl von Schichten (d1, d2, ...), vorzugsweise zwei, drei oder vier Schichten, besteht; und

wobei die Schicht (d) oder die Mehrzahl von Schichten (d1, d2, ...) jeweils ein thermoplastisches Harz, vorzugsweise ein Polyolefin, mit einer Dichte von weniger als 1,00 g/cm$^3$, vorzugsweise weniger als 0,98 g/cm$^3$, enthält oder daraus besteht.

9. Verbundfolie nach Anspruch 7 oder 8, **dadurch gekennzeichnet, dass**

das thermoplastische Harz der Schicht (a) und das thermoplastische Harz der Schicht (b) unterschiedlich sind; oder
das thermoplastische Harz der Schicht (a) sich von dem thermoplastischen Harz der Schicht (b) oder von allen thermoplastischen Harzen der Schichten (b1, b2, ...) unterscheidet; oder
das thermoplastische Harz der Schicht (a) und das thermoplastische Harz der Schicht (b) identisch sind; oder
das thermoplastische Harz der Schicht (a) mit wenigstens einem der thermoplastischen Harze der Schichten (b1, b2, ...) identisch ist.

10. Verbundfolie nach einem der Ansprüche 7 bis 9, **dadurch gekennzeichnet, dass**

das thermoplastische Harz der Schicht (c) ein Polyolefin mit einer Siegeltemperatur ist, welche kleiner als die Siegeltemperatur des thermoplastischen Harzes der Schicht (a) ist; und/oder
das thermoplastische Harz der Schicht (b) eine Sauerstoffdurchlässigkeit von weniger als 100 cm$^3$/m$^2$ d·bar aufweist, gemessen bei 23 °C und 75 % relativer Luftfeuchtigkeit nach ASTMD 1434, oder die thermoplastischen Harze der Schichten (b1, b2, ...) jeweils oder in Summe eine Sauerstoffdurchlässigkeit von weniger als 100 cm$^3$/m$^2$ ·d ·bar aufweisen, gemessen bei 23 °C und 75 % relativer Luftfeuchtigkeit nach ASTMD 1434; und/oder
die Schicht (b) eine Sauerstoffdurchlässigkeit von weniger als 100 cm$^3$/m$^2$ ·d·bar aufweist, gemessen bei 23 °C und 75 % relativer Luftfeuchtigkeit nach ASTMD 1434, oder die Schichten (b1, b2, ...) jeweils oder in Summe eine Sauerstoffdurchlässigkeit von weniger als 100 cm$^3$/m$^2$ ·d·bar aufweisen, gemessen bei 23 °C und 75 % relativer Luftfeuchtigkeit nach ASTMD 1434.

11. Verbundfolie nach einem der Ansprüche 7 bis 10, **dadurch gekennzeichnet, dass** die Verbundfolie einen Schrumpf von weniger als 0,03 in der Maschinenrichtung (MD) aufweist, wobei der Schrumpf gemäß ASTM 2732 gemessen wird; und/oder die Verbundfolie nach dem Verstrecken und Relaxieren einen Schrumpf von weniger als 0,03 in der Querrichtung (TD) aufweist, wobei der Schrumpf gemäß ASTM 2732 gemessen wird.

12. Verbundfolie nach einem der Ansprüche 7 bis 11, **dadurch gekennzeichnet, dass**

die Dicke der Schicht (a) 20 %, vorzugsweise 10 %, der Dicke der gesamten Verbundfolie nicht überschreitet; und/oder
die Dicke der Schicht (b) oder die Gesamtdicke der Schichten (b1, b2, ...) 20 %, vorzugsweise 10 %, der Dicke der gesamten Verbundfolie nicht überschreitet; und/oder
der Massenanteil der Schicht (a) bezogen auf die Gesamtmasse der Verbundfolie 10 % nicht überschreitet; und/oder
der Massenanteil der Schicht (b) oder die Summe der Massenanteile der Schichten (b1, b2, ...) bezogen auf die Gesamtmasse der Verbundfolie 10 % nicht überschreitet; und/oder
die Summe der Massenanteile der Schicht (a) und der Schicht (b) oder der Schicht (a) und der Schichten (b1, b2, ...) bezogen auf die Gesamtmasse der Verbundfolie 10 % nicht überschreitet.

**13.** Verbundfolie nach einem der Ansprüche 7 bis 12, **dadurch gekennzeichnet, dass**

das thermoplastische Harz der Schicht (a) ein Polyester, vorzugsweise ein Polyethylenterephthalat (PET) oder eine Polymilchsäure bzw. ein Polylactid (PLA), ein Polyamid (PA), ein Ethylen-Vinylalkohol-Copolymer (EVOH), oder eine beliebige Mischung derselben enthält oder daraus besteht; wobei Ethylen-Vinylalkohol-Copolymer (EVOH) gleichsam für Ethylen-Vinylalkohol-Copolymer, als auch für eine Mischung von Ethylen-Vinylalkohol-Copolymer mit anderen Polymeren, Ionomeren, EMA oder EMMA, vorzugsweise für eine Mischung aus EVOH und PA oder aus EVOH und Ionomer, steht; und/oder das thermoplastische Harz der Schicht (c) ein Polyolefin (PO), vorzugsweise ein Polyethylen (PE) und/oder ein Polypropylen (PP), ein Ethylen-Vinylacetat-Copolymer (EVA), ein Ionomer (IO), ein Ethylen-Methylmethacrylat-Copolymer (EMMA), ein Ethylen-Methacrylsäure-Copolymer (EMA), oder eine beliebige Mischung derselben enthält oder daraus besteht.

**14.** Verwendung einer mehrschichtigen Verbundfolie nach einem der Ansprüche 7 bis 13 oder einer daraus hergestellten Hülle zum Verpacken eines Gegenstandes, vorzugsweise zum Verpacken eines Nahrungsmittels, eines Genussmittels oder eines flüssigen oder festen, insbesondere pulverförmigen, Guts.

**15.** Verfahren nach einem der Ansprüche 1 bis 6, Verbundfolie nach einem der Ansprüche 7 bis 13 oder Verwendung nach Anspruch 14, **dadurch gekennzeichnet, dass** der Massenanteil der Schichtbestandteile mit einer Schmelzetemperatur von größer 170 °C, gemessen gemäß DIN 51007:2019-04, vorzugsweise des thermoplastischen Harzes der Schicht (a) mit einer Schmelzetemperatur von größer 170 °C, gemessen gemäß DIN 51007:2019-04, 1 bis < 40 %, vorzugsweise 1 bis < 30 %, vorzugsweise 1 bis < 20 %, insbesondere 5 bis < 20 %, bezogen auf die Gesamtmasse der Verbundfolie, beträgt.

**Claims**

**1.** Method for producing a multilayered composite film, wherein the method includes at least the following steps:

a step of coextruding at least three layers (a), (b) and (c) of which

- the layer (a) forms an outward surface of the composite film;
- the layer (c) forms a surface of the composite film facing or coming in contact with a good to be packaged; and
- the layer (b) is disposed between the layer (a) and the layer (c);
- wherein the layer (b) consists of a single layer or a plurality of layers (b1, b2, b3, b4, ...), preferably two, three or four layers;

a step of stretching the coextruded composite film; and
a step of relaxing the stretched composite film;
wherein the stretching is bi-axial;
wherein a stretch factor in the machine direction or longitudinal direction (MD) is at least 2.0;
wherein a stretch factor in the transversal direction (TD) is at least 2.0;
wherein the sum of the stretch factor in the machine direction (MD) and the stretch factor in the transversal direction (TD) is at least 5.0;
wherein the composite film has a temperature of 70 to 130 °C during stretching;
wherein a relaxation factor in the machine direction (MD) is more than 0.00;
wherein a relaxation factor in the transversal direction (TD) is more than 0.00;
wherein the sum of the relaxation factor in the machine direction (MD) and the relaxation factor in the transversal direction (TD) is at least 0.05 (= 5 %), preferably at least 0.1 (= 10 %), preferably at least 0.2 (= 20 %), in particular at least 0.4 (= 40 %);
wherein the composite film has a temperature of 60 to 180 °C, preferably 60 to 150 °C, more preferably 60 to 120 °C, in particular preferably 80 to 100 °C, during relaxation;
wherein a dwell time during relaxation, preferably during relaxation under temperature, is at least 2 seconds and at most 30 seconds, or the duration of relaxation is preferably at least 2 seconds and at most 30 seconds;
wherein a residual stretch factor in the machine direction (MD) is at most 5.0;
wherein a residual stretch factor in the transversal direction (TD) is at most 5.0;
wherein the layer (a) consists of a thermoplastic resin having a density of greater than 1.00 g/cm$^3$ and a melting temperature of more than 170 °C, as measured according to DIN 51007:2019-04;

wherein the layer (b) or the plurality of the layers (b1, b2, ...) each comprises or consists of a thermoplastic resin having a density of greater than 1.00 g/cm$^3$;

wherein the mass proportion of the thermoplastic resins having a density > 1.00 g/cm$^3$ is 1 to < 20 % relative to the total mass of the composite film; and

wherein the layer (c) comprises or consists of a thermoplastic resin having a density of less than 0.95 g/cm$^3$ and a melting temperature of less than 120 °C, as measured according to DIN 51007:2019-04.

2. Method according to claim 1, **characterized in that** the method includes at least the following step:

a step of coextruding at least four layers (a), (b), (d), and (c) of which

- the layer (d) is disposed between the layer (a) and the layer (c), preferably between the layer (a) and the layer (b);
- wherein the layer (d) consists of a single layer or a plurality of layers (d1, d2, ...), preferably two, three or four layers; and

wherein the layer (d) or the plurality of the layers (d1, d2, ...) each comprises or consists of a thermoplastic resin, preferably a polyolefin, having a density of less than 1.00 g/cm$^3$, preferably less than 0.98 g/cm$^3$.

3. Method according to claim 1 or 2, **characterized in that**

the thermoplastic resin of the layer (a) and the thermoplastic resin of the layer (b) are different; or
the thermoplastic resin of the layer (a) is different from the thermoplastic resin of the layer (b) or from all thermoplastic resins of the layers (b1, b2, ...); or
the thermoplastic resin of the layer (a) and the thermoplastic resin of the layer (b) are identical; or
the thermoplastic resin of the layer (a) is identical to at least one of the thermoplastic resins of the layers (b1, b2, ...).

4. Method according to any one of claims 1 to 3, **characterized in that**

the thermoplastic resin of the layer (c) is a polyolefin having a sealing temperature lower than the sealing temperature of the thermoplastic resin of the layer (a); and/or
the thermoplastic resin of the layer (b) has an oxygen permeability of less than 100 cm$^3$/m$^2$·d·bar, measured at 23 °C and 75 % relative humidity according to ASTMD 1434, or the thermoplastic resins of the layers (b1, b2, ...) each or in total have an oxygen permeability of less than 100 cm$^3$/m$^2$ ·d·bar, measured at 23 °C and 75 % relative humidity according to ASTMD 1434; and/or
the layer (b) has an oxygen permeability of less than 100 cm$^3$/m$^2$ ·d·bar, measured at 23 °C and 75 % relative humidity according to ASTMD 1434, or the layers (b1, b2, ...) each or in total have an oxygen permeability of less than 100 cm$^3$/m$^2$·d·bar, measured at 23 °C and 75 % relative humidity according to ASTMD 1434; and/or
the stretching is carried out simultaneously or successively in several stages; and/or
the composite film after stretching and relaxation has a shrinkage of less than 0.05 (= 5 %), preferably less than 0.03 (= 3 %), in the machine direction (MD), wherein the shrinkage is measured according to ASTM 2732; and/or
the composite film after stretching and relaxation has a shrinkage of less than 0.05 (= 5 %), preferably less than 0.03 (= 3 %), in the transversal direction (TD), wherein the shrinkage is measured according to ASTM 2732; and/or
the composite film after stretching and relaxation preferably has a sum of the shrinkage in the machine direction (MD) and the shrinkage in the transversal direction (TD) (= total shrinkage) of less than 0.05 (= 5 %), wherein the shrinkage is measured according to ASTM 2732.

5. Method according to any one of claims 1 to 4, **characterized in that**

the thickness of the layer (a) does not exceed 20 %, preferably 10 %, of the thickness of the entire composite film; and/or
the thickness of the layer (b) or the total thickness of the layers (b1, b2, ...) does not exceed 20 %, preferably 10 %, of the thickness of the entire composite film; and/or
the mass proportion of the layer (a) relative to the total mass of the composite film does not exceed 10 %; and/or
the mass proportion of the layer (b) or the sum of the mass proportions of the layers (b1, b2, ...) relative to the total mass of the composite film does not exceed 10 %; and/or
the sum of the mass proportions of the layer (a) and (b) or of the layer (a) and the layers (b1, b2, ...) relative to the total mass of the composite film does not exceed 10 %.

6. Method according to any one of the claims 1 to 5, **characterized in that**

the thermoplastic resin of the layer (a) contains or consists of a polyester, preferably a polyethylene terephthalate (PET) or a polylactic acid or a polylactide (PLA), a polyamide (PA), an ethylene-vinyl alcohol copolymer (EVOH), or any mixture thereof, wherein ethylene-vinyl alcohol copolymer (EVOH) stands for EVOH as well as for a blend of EVOH with other polymers, ionomers, EMA or EMMA, in particular, a blend of EVOH and PA or of EVOH and ionomer; and/or
the thermoplastic resin of the layer (c) comprises or consists of a polyolefin (PO), preferably a polyethylene (PE) and/or a polypropylene (PP), an ethylene-vinyl acetate copolymer (EVA), an ionomer (IO), an ethylene-methyl methacrylate copolymer (EMMA), an ethylene-methacrylic acid copolymer (EMA), or any mixture thereof.

7. Multilayered, coextruded, biaxially stretched, and relaxed composite film, preferably produced by the method according to any one of claims 1 to 6,
comprising at least three layers (a), (b) and (c), of which

- the layer (a) forms an outward surface of the composite film;
- the layer (c) forming a surface of the composite film facing or coming in contact with a good to be packaged; and
- the layer (b) is disposed between the layer (a) and the layer (c);
- wherein the layer (b) consists of a single layer or a plurality of layers (b1, b2, b3, b4, ...), preferably two, three or four layers;
wherein a residual stretch factor of the composite film in the machine direction (MD) is at most 5.0;
wherein a residual stretch factor of the composite film in the transversal direction (TD) is at most 5.0;
wherein the layer (a) consists of a thermoplastic resin having a density of greater than 1.00 g/cm$^3$ and a melting temperature of more than 170 °C, as measured according to DIN 51007:2019-04;
wherein the layer (b) or the plurality of the layers (b1, b2, ...) each comprises or consists of a thermoplastic resin having a density of greater than 1.00 g/cm$^3$;
wherein the mass proportion of the thermoplastic resins having a density > 1.00 g/cm$^3$ is 1 to < 20 % relative to the total mass of the composite film;
wherein the layer (c) comprises or consists of a thermoplastic resin having a density of less than 0.95 g/cm$^3$ and a melting temperature of less than 120 °C, as measured according to DIN 51007:2019-04; and
wherein the composite film has a sum of the shrinkage in the machine direction (MD) and the shrinkage in the transversal direction (TD) of less than 0.05, wherein the shrinkage is measured according to ASTM 2732.

8. Composite film according to claim 7, comprising at least four layers (a), (b), (d) and (c), of which

- the layer (d) is disposed between the layer (a) and the layer (c), preferably between the layer (a) and the layer (b);
- wherein the layer (d) consists of a single layer or a plurality of layers (d1, d2, ...), preferably two, three or four layers; and

wherein the layer (d) or the plurality of the layers (d1, d2, ...) each comprises or consists of a thermoplastic resin, preferably a polyolefin, having a density of less than 1.00 g/cm$^3$, preferably less than 0.98 g/cm$^3$.

9. Composite film according to claim 7 or 8, **characterized in that**

the thermoplastic resin of the layer (a) and the thermoplastic resin of the layer (b) are different; or
the thermoplastic resin of the layer (a) is different from the thermoplastic resin of the layer (b) or from all thermoplastic resins of the layers (b1, b2, ...); or
the thermoplastic resin of the layer (a) and the thermoplastic resin of the layer (b) are identical; or
the thermoplastic resin of the layer (a) is identical to at least one of the thermoplastic resins of the layers (b1, b2, ...).

10. Composite film according to any one of claims 7 to 9, **characterized in that**

the thermoplastic resin of the layer (c) is a polyolefin having a sealing temperature lower than the sealing temperature of the thermoplastic resin of the layer (a); and/or
the thermoplastic resin of the layer (b) has an oxygen permeability of less than 100 cm$^3$/m$^2$·d·bar, measured

at 23 °C and 75 % relative humidity according to ASTMD 1434, or the thermoplastic resins of the layers (b1, b2, ...) each or in total have an oxygen permeability of less than 100 cm$^3$/m$^2$ ·d·bar, measured at 23 °C and 75 % relative humidity according to ASTMD 1434; and/or

the layer (b) has an oxygen permeability of less than 100 cm$^3$/m$^2$ ·d·bar, measured at 23 °C and 75 % relative humidity according to ASTMD 1434, or the layers (b1, b2, ...) each or in total have an oxygen permeability of less than 100 cm$^3$/m$^2$·d·bar, measured at 23 °C and 75 % relative humidity according to ASTMD 1434.

**11.** Composite film according to any one of claims 7 to 10, **characterized in that**

the composite film has a shrinkage of less than 0.03 in the machine direction (MD), wherein the shrinkage is measured according to ASTM 2732; and/or
the composite film after stretching and relaxation has a shrinkage of less than 0.03 in the transversal direction (TD), wherein the shrinkage is measured according to ASTM 2732.

**12.** Composite film according to any one of claims 7 to 11, **characterized in that**

the thickness of the layer (a) does not exceed 20 %, preferably 10 %, of the thickness of the entire composite film; and/or
the thickness of the layer (b) or the total thickness of the layers (b1, b2, ...) does not exceed 20 %, preferably 10 %, of the thickness of the entire composite film; and/or
the mass proportion of the layer (a) relative to the total mass of the composite film does not exceed 10 %; and/or
the mass proportion of the layer (b) or the sum of the mass proportions of the layers (b1, b2, ...) relative to the total mass of the composite film does not exceed 10 %; and/or
the sum of the mass proportions of the layer (a) and layer (b) or of the layer (a) and the layers (b1, b2, ...) relative to the total mass of the composite film does not exceed 10 %.

**13.** Composite film according to any one of claims 7 to 12, **characterized in that**

the thermoplastic resin of the layer (a) contains or consists of a polyester, preferably a polyethylene terephthalate (PET) or a polylactic acid or a polylactide (PLA), a polyamide (PA), an ethylene-vinyl alcohol copolymer (EVOH), or any mixture thereof, wherein ethylene-vinyl alcohol copolymer (EVOH) stands for EVOH as well as for a blend of EVOH with other polymers, ionomers, EMA or EMMA, in particular, a blend of EVOH and PA or of EVOH and ionomer; and/or
the thermoplastic resin of the layer (c) comprises or consists of a polyolefin (PO), preferably a polyethylene (PE) and/or a polypropylene (PP), an ethylene-vinyl acetate copolymer (EVA), an ionomer (IO), an ethylene-methyl methacrylate copolymer (EMMA), an ethylene-methacrylic acid copolymer (EMA), or any mixture thereof.

**14.** Use of a multilayered composite film according to any one of claims 7 to 13 or of a casing made therefrom for packaging a good, preferably for packaging a food product, a luxury food product or a liquid or solid, in particular powdered, good.

**15.** Method according to any one of claims 1 to 6, composite film according to any one of claims 7 to 13 or use according to claim 14, **characterized in that** the mass proportion of the layer components having a melting temperature of more than 170 °C, as measured according to DIN 51007:2019-04, preferably of the thermoplastic resin of the layer (a) having a melting temperature of more than 170 °C, as measured according to DIN 51007:2019-04, is 1 to < 40%, preferably 1 to < 30%, preferably 1 to < 20%, in particular 5 to < 20 %, relative to the total mass of the composite film.

**Revendications**

**1.** Procédé de fabrication d'une feuille composite multicouche, le procédé comprenant au moins les étapes suivantes :

une étape de coextrusion d'au moins trois couches (a), (b) et (c), dont

- la couche (a) forme une surface de la feuille composite vers l'extérieur ;
- la couche (c) forme une surface de la feuille composite tournée vers un produit à emballer ou venant en contact avec celui-ci ; et
- la couche (b) est disposée entre la couche (a) et la couche (c) ;

- la couche (b) étant constituée d'une seule couche ou d'une pluralité de couches (b1, b2, b3, b4, ...), de préférence deux, trois ou quatre couches ;

une étape d'étirage de la feuille composite coextrudée ; et
une étape de relaxation de la feuille composite étirée ;
dans lequel
l'étirage est effectué de manière biaxiale ;
un facteur d'étirage dans le sens machine ou dans le sens longitudinal (MD) est d'au moins 2,0 ;
un facteur d'étirage dans le sens travers ou dans le sens transversal (TD) est d'au moins 2,0 ;
la somme du facteur d'étirage dans le sens machine (MD) et du facteur d'étirage dans le sens transversal (TD) est d'au moins 5,0 ;
pendant l'étirage, la feuille composite présente une température de 70 à 130 °C ;
un facteur de relaxation dans le sens machine (MD) est supérieur à 0,00 ;
un facteur de relaxation dans le sens transversal (TD) est supérieur à 0,00 ;
la somme du facteur de relaxation dans le sens machine (MD) et du facteur de relaxation dans le sens transversal (TD) est d'au moins 0,05 (= 5 %), de préférence d'au moins 0,1 (= 10 %), de préférence d'au moins 0,2 (= 20 %), en particulier d'au moins 0,4 (= 40 %) ;
pendant la relaxation, la feuille composite présente une température de 60 à 180 °C, de préférence de 60 à 150 °C, de préférence encore de 60 à 120 °C, de préférence encore de 80 à 100 °C ;
un temps de séjour pendant la relaxation, de préférence pendant la relaxation à température, est de 2 secondes au minimum et de 30 secondes au maximum, ou la durée de la relaxation est de 2 secondes au minimum et 30 secondes au maximum ;
un facteur d'étirage résiduel dans le sens machine (MD) est au maximum de 5,0 ;
un facteur d'étirage résiduel dans le sens transversal (TD) est au maximum de 5,0 ;
la couche (a) est constituée d'une résine thermoplastique ayant une masse volumique supérieure à 1,00 g/cm$^3$ et une température de fusion supérieure à 170 °C, mesurées selon la norme DIN 51007:2019-04 ;
la couche (b) ou la pluralité de couches (b1, b2, ...) contient ou consiste chacune en une résine thermoplastique ayant une masse volumique supérieure à 1,00 g/cm$^3$ ;
la proportion en masse des résines thermoplastiques ayant une masse volumique supérieure à 1,00 g/cm$^3$ est de 1 à < 20 % par rapport à la masse totale de la feuille composite ;
et
la couche (c) contient ou consiste en une résine thermoplastique ayant une masse volumique inférieure à 0,95 g/cm$^3$ et une température de fusion inférieure à 120 °C, mesurées selon la norme DIN 51007:2019-04.

2. Procédé selon la revendication 1, **caractérisé en ce que** le procédé comprend l'étape suivante :

une étape de coextrusion d'au moins quatre couches (a), (b), (d) et (c),
dans lequel :

- la couche (d) est disposée entre la couche (a) et la couche (c), de préférence entre la couche (a) et la couche (b) ;
- la couche (d) est constituée d'une seule couche ou d'une pluralité de couches (d1, d2, ...), de préférence de deux, trois ou quatre couches ;
et
- la couche (d) ou la pluralité de couches (d1, d2, ...) contient ou consiste chacune en une résine thermoplastique, de préférence une polyoléfine, ayant une masse volumique inférieure à 1,00 g/cm$^3$, de préférence inférieure à 0,98 g/cm$^3$.

3. Procédé selon la revendication 1 ou 2, **caractérisé en ce que**

la résine thermoplastique de la couche (a) et la résine thermoplastique de la couche (b) sont différentes ; ou
la résine thermoplastique de la couche (a) est différente de la résine thermoplastique de la couche (b) ou de toutes les résines thermoplastiques des couches (b1, b2, ...) ; ou
la résine thermoplastique de la couche (a) et la résine thermoplastique de la couche (b) sont identiques ; ou
la résine thermoplastique de la couche (a) est identique à l'une au moins des résines thermoplastiques des couches (b1, b2, ...).

4. Procédé selon l'une des revendications 1 à 3, **caractérisé en ce que** la résine thermoplastique de la couche (c) est une polyoléfine ayant une température de scellage inférieure à la température de scellage de la résine thermoplastique de la couche (a) ; et/ou

la résine thermoplastique de la couche (b) présente une perméabilité à l'oxygène inférieure à 100 cm$^3$/m$^2$·d.bar, mesurée à 23 °C et 75 % d'humidité relative selon la norme ASTMD 1434, ou les résines thermoplastiques des couches (b1, b2, ...) présentent chacune ou en somme une perméabilité à l'oxygène inférieure à 100 cm$^3$/m$^2$·d.bar, mesurée à 23 °C et 75 % d'humidité relative selon la norme ASTMD 1434 ; et/ou
la couche (b) présente une perméabilité à l'oxygène inférieure à 100 cm$^3$/m$^2$·d.bar, mesurée à 23 °C et 75 % d'humidité relative selon la norme ASTMD 1434, ou les couches (b1, b2, ...) présentent chacune ou en somme une perméabilité à l'oxygène inférieure à 100 cm$^3$/m$^2$·d.bar, mesurée à 23 °C et 75 % d'humidité relative selon la norme ASTMD 1434 ; et/ou l'étirage est effectué simultanément ou en plusieurs étapes successives ; et/ou
la feuille composite, après étirage et relaxation, présente un retrait inférieur à 0,05 (= 5 %), de préférence inférieur à 0,03 (= 3 %), dans le sens machine (MD), le retrait étant mesuré selon la norme ASTM 2732 ; et/ou
la feuille composite, après étirage et relaxation, présente un retrait inférieur à 0,05 (= 5 %), de préférence inférieur à 0,03 (= 3 %), dans le sens transversal (TD), le retrait étant mesuré selon la norme ASTM 2732 ; et/ou
de préférence, après étirage et relaxation, la feuille composite présente une somme du retrait dans le sens machine (MD) et du retrait dans le sens transversal (TD) (= retrait total) inférieure à 0,05 (= 5 %), le retrait étant mesuré selon la norme ASTM 2732.

5. Procédé selon l'une des revendications 1 à 4, **caractérisé en ce que**

l'épaisseur de la couche (a) ne dépasse pas 20 %, de préférence 10 %, de l'épaisseur de la feuille composite totale ; et/ou
l'épaisseur de la couche (b) ou l'épaisseur totale des couches (b1, b2, ...) ne dépasse pas 20 %, de préférence 10 %, de l'épaisseur de la feuille composite totale ; et/ou
la proportion en masse de la couche (a) par rapport à la masse totale de la feuille composite ne dépasse pas 10 % ; et/ou
la proportion en masse de la couche (b) ou la somme des proportions en masse des couches (b1, b2, ...) par rapport à la masse totale de la feuille composite ne dépasse pas 10 % ; et/ou
la somme des proportions en masse des couches (a) et (b) ou des couches (a) et (b1, b2, ...) par rapport à la masse totale de la feuille composite ne dépasse pas 10 %.

6. Procédé selon l'une des revendications 1 à 5, **caractérisé en ce que** la résine thermoplastique de la couche (a) contient ou consiste en un polyester, de préférence un polyéthylène téréphtalate (PET) ou un acide polylactique ou un polylactide (PLA), un polyamide (PA), un copolymère éthylène-alcool vinylique (EVOH), ou un mélange quelconque de ceux-ci ;

où le copolymère éthylène-alcool vinylique (EVOH) représente à la fois un copolymère éthylène-alcool vinylique et un mélange de copolymère éthylène-alcool vinylique avec d'autres polymères, ionomères, EMA ou EMMA, de préférence un mélange de EVOH et de PA ou de EVOH et d'ionomère ; et/ou
la résine thermoplastique de la couche (c) contient ou consiste en une polyoléfine (PO), de préférence un polyéthylène (PE) et/ou un polypropylène (PP), un copolymère éthylène-acétate de vinyle (EVA), un ionomère (IO), un copolymère éthylène-méthacrylate de méthyle (EMMA), un copolymère éthylène-acide méthacrylique (EMA), ou un mélange quelconque de ceux-ci.

7. Feuille composite multicouche, coextrudée, étirée bi-axialement et relaxée, de préférence fabriquée par le procédé selon l'une des revendications 1 à 6, comprenant au moins trois couches (a), (b) et (c), dont

- la couche (a) forme une surface de la feuille composite vers l'extérieur ;
- la couche (c) forme une surface de la feuille composite tournée vers un produit à emballer ou venant en contact avec celui-ci ; et
- la couche (b) est disposée entre la couche (a) et la couche (c) ;
- la couche (b) étant constituée d'une seule couche ou d'une pluralité de couches (b1, b2, b3, b4, ...), de préférence de deux, trois ou quatre couches ;

dans laquelle

un facteur d'étirage résiduel de la feuille composite dans le sens machine (MD) est au maximum de 5,0 ;

un facteur d'étirage résiduel de la feuille composite dans le sens transversal (TD) est au maximum de 5,0 ;
la couche (a) est constituée d'une résine thermoplastique ayant une masse volumique supérieure à 1,00 g/cm$^3$ et une température de fusion supérieure à 170 °C, mesurées selon la norme DIN 51007:2019-04 ;
la couche (b) ou la pluralité de couches (b1, b2, ...) contient ou consiste chacune en une résine thermoplastique ayant une masse volumique supérieure à 1,00 g/cm$^3$ ;
la proportion en masse des résines thermoplastiques ayant une masse volumique supérieure à 1,00 g/cm$^3$ est de 1 à < 20 % par rapport à la masse totale de la feuille composite ;
la couche (c) contient ou consiste en une résine thermoplastique ayant une masse volumique inférieure à 0,95 g/cm$^3$ et une température de fusion inférieure à 120 °C, mesurées selon la norme DIN 51007:2019-04 ; et
la feuille composite présente une somme du retrait dans le sens machine (MD) et du retrait dans le sens transversal (TD) inférieure à 0,05, le retrait étant mesuré selon la norme ASTM 2732.

8. Feuille composite selon la revendication 7, comprenant au moins quatre couches (a), (b), (d) et (c), dans laquelle

- la couche (d) est disposée entre la couche (a) et la couche (c), de préférence entre la couche (a) et la couche (b) ;
- la couche (d) est constituée d'une seule couche ou d'une pluralité de couches (d1, d2, ...), de préférence de deux, trois ou quatre couches ;
et

la couche (d) ou la pluralité de couches (d1, d2, ...) contient ou consiste chacune en une résine thermoplastique, de préférence une polyoléfine, ayant une masse volumique inférieure à 1,00 g/cm$^3$, de préférence inférieure à 0,98 g/cm$^3$.

9. Feuille composite selon la revendication 7 ou 8, **caractérisée en ce que** la résine thermoplastique de la couche (a) et la résine thermoplastique de la couche (b) sont différentes ; ou

la résine thermoplastique de la couche (a) est différente de la résine thermoplastique de la couche (b) ou de toutes les résines thermoplastiques des couches (b1, b2, ...) ; ou
la résine thermoplastique de la couche (a) et la résine thermoplastique de la couche (b) sont identiques ; ou
la résine thermoplastique de la couche (a) est identique à l'une au moins des résines thermoplastiques des couches (b1, b2, ...).

10. Feuille composite selon l'une des revendications 7 à 9, **caractérisée en ce que**

la résine thermoplastique de la couche (a) est une polyoléfine ayant une température de scellage inférieure à la température de scellage de la résine thermoplastique de la couche (a) ; et/ou
la résine thermoplastique de la couche (b) présente une perméabilité à l'oxygène inférieure à 100 cm$^3$/m$^2$·d.bar, mesurée à 23 °C et 75 % d'humidité relative selon la norme ASTMD 1434, ou les résines thermoplastiques des couches (b1, b2, ...) présentent chacune ou en somme une perméabilité à l'oxygène inférieure à 100 cm$^3$/m$^2$·d.bar, mesurée à 23 °C et 75 % d'humidité relative selon la norme ASTMD 1434 ; et/ou
la couche (b) présente une perméabilité à l'oxygène inférieure à 100 cm$^3$/m$^2$·d.bar, mesurée à 23 °C et 75 % d'humidité relative selon la norme ASTMD 1434, ou les couches (b1, b2, ...) présentent chacune ou en somme une perméabilité à l'oxygène inférieure à 100 cm$^3$/m$^2$·d.bar, mesurée à 23 °C et 75 % d'humidité relative selon la norme ASTMD 1434.

11. Feuille composite selon l'une des revendications 7 à 10, **caractérisée en ce que**

la feuille composite présente un retrait inférieur à 0,03 dans le sens machine (MD), le retrait étant mesuré selon la norme ASTM 2732 ; et/ou
la feuille composite, après étirage et relaxation, présente un retrait inférieur à 0,03 dans le sens transversal (TD), le retrait étant mesuré selon la norme ASTM 2732.

12. Feuille composite selon l'une des revendications 7 à 11, **caractérisée en ce que**

l'épaisseur de la couche (a) ne dépasse pas 20 %, de préférence 10 %, de l'épaisseur de la feuille composite totale ; et/ou
l'épaisseur de la couche (b) ou l'épaisseur totale des couches (b1, b2, ...) ne dépasse pas 20 %, de préférence 10 %, de l'épaisseur de la feuille composite totale ; et/ou
la proportion en masse de la couche (a) par rapport à la masse totale de la feuille composite ne dépasse pas 10 % ; et/ou
la proportion en masse de la couche (b) ou la somme des proportions en masse des couches (b1, b2, ...) par rapport à la masse totale de la feuille composite ne dépasse pas 10 % ; et/ou
la somme des proportions en masse de la couche (a) et de la couche (b) ou de la couche (a) et des couches (b1, b2, ...) par rapport à la masse totale de la feuille composite ne dépasse pas 10 %.

13. Feuille composite selon l'une des revendications 7 à 12, **caractérisée en ce que**

la résine thermoplastique de la couche (a) contient ou consiste en un polyester, de préférence un polyéthylène téréphtalate (PET) ou un acide polylactique ou un polylactide (PLA), un polyamide (PA), un copolymère éthylène-alcool vinylique (EVOH), ou un mélange quelconque de ceux-ci ;
où le copolymère éthylène-alcool vinylique (EVOH) représente à la fois un copolymère éthylène-alcool vinylique et un mélange de copolymère éthylène-alcool vinylique avec d'autres polymères, ionomères, EMA ou EMMA, de préférence un mélange d'EVOH et de PA ou d'EVOH et d'ionomère ; et/ou
la résine thermoplastique de la couche (c) contient ou consiste en une polyoléfine (PO), de préférence un polyéthylène (PE) et/ou un polypropylène (PP), un copolymère éthylène-acétate de vinyle (EVA), un ionomère (IO), un copolymère éthylène-méthacrylate de méthyle (EMMA), un copolymère éthylène-acide méthacrylique (EMA), ou un mélange quelconque de ceux-ci.

14. Utilisation d'une feuille composite multicouche selon l'une des revendications 7 à 13 ou d'une enveloppe réalisée à partir de ladite feuille pour l'emballage d'un objet, de préférence pour l'emballage d'un produit alimentaire, d'un produit d'agrément ou d'un produit liquide ou solide, en particulier pulvérulent.

15. Procédé selon l'une des revendications 1 à 6, feuille composite selon l'une des revendications 7 à 13 ou utilisation selon la revendication 14, **caractérisé en ce que** la proportion en masse des constituants de la couche ayant une température de fusion supérieure à 170°C, mesurée selon la norme DIN 51007:2019-04, de préférence de la résine thermoplastique de la couche (a) ayant une température de fusion supérieure à 170°C, mesurée selon la norme DIN 51007:2019-04, est de 1 à < 40 %, de préférence de 1 à < 30 %, de préférence de 1 à < 20 %, en particulier de 5 à < 20 %, par rapport à la masse totale de la feuille composite.

# FIG. 1

**Duplex**

BoPET/BoPA/BoPP 10-12µm

Metallisierung

Kleber

PE-Siegelfolie 20-120µm

# FIG. 2

**Duplex**

BoPET/BoPA/BoPP 10-12µm

Metallisierung

Kleber

PE-Siegelfolie 20-120µm

# FIG. 3

Duplex

BoPET/BoPA/BoPP 10-12μm

Kleber

Barrierefolie mit Siegelschicht 20-120μm

# FIG. 4

Duplex

BoPET/BoPA/BoPP 10-12μm

Kleber

Barrierefolie mit Siegelschicht 20-120μm

# FIG. 5

Triplex

BoPET/BoPA/BoPP 10-12µm

Kleber

Aluminiumfolie 5-6µm

Kleber

PE-Siegelschicht 20-120µm

# FIG. 6

Triplex

BoPET/BoPA/BoPP 10-12µm

Kleber

Aluminiumfolie 5-6µm

Kleber

PE-Siegelschicht 20-120µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10227580 A1
- DE 10254172 A1
- DE 102006046483 A1
- DE 102006036844 A1
- EP 0476836 B2
- EP 1190847 B1
- EP 1084035 B1
- EP 1985444 A1
- US 2017321024 A1
- US 2010003433 A1
- DE 19916428 B4
- DE 10048178 B4

**In der Beschreibung aufgeführte Nicht-Patentliteratur**

- **SAVIC, Z. ; SAVIC, I.** Sausage Casings. VICTUS Lebensmittelindustriebedarf Vertriebsgesellschaft m.b.H, 2002, 267-270